(19)

Europäisches
Patentamt

European
Patent Office

Office européen
des brevets

(11) **EP 4 694 448 A1**

(12) **EUROPEAN PATENT APPLICATION**
published in accordance with Art. 153(4) EPC

(43) Date of publication:
**11.02.2026 Bulletin 2026/07**

(21) Application number: **23929520.7**

(22) Date of filing: **31.03.2023**

(51) International Patent Classification (IPC):
***H04W 72/0446*** *(2023.01)*

(52) Cooperative Patent Classification (CPC):
**H04W 72/0446; H04W 72/0457**

(86) International application number:
**PCT/CN2023/085779**

(87) International publication number:
**WO 2024/197937 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **WANG, Lei
Beijing 100085 (CN)**

(74) Representative: **Hersina, Günter et al
Schoppe, Zimmermann, Stöckeler
Zinkler, Schenk & Partner mbB
Patentanwälte
Radlkoferstrasse 2
81373 München (DE)**

(54) **TRANSMISSION RESOURCE DETERMINATION METHOD AND APPARATUS, AND STORAGE MEDIUM**

(57)    The present disclosure belongs to the technical field of communications. Provided are a transmission resource determination method and apparatus, and a storage medium. The method comprises: by means of the interaction between a user equipment (UE) and a network device, the user equipment (UE) determining, according to a protocol agreement or indication information which is sent by the network device, an RBG in a downlink time slot or a flexible time slot in which an uplink sub-band is configured; and the network device deter-
mining, according to the protocol agreement or related indication information, the RBG in the downlink time slot or the flexible time slot in which the uplink sub-band is configured. Therefore, the problem of a resource utilization rate being low due to the unavailability of an edge RGB of a part of crossing sub-bands in a downlink time slot or a flexible time slot in which an uplink sub-band is configured is solved, and a downlink resource utilization rate is thus improved.

determining, based on a protocol agreement or indication information sent by a network device, a resource block group (RBG) in a downlink slot or a flexible slot configured with an uplink subband

101

FIG. 1

EP 4 694 448 A1

**EP 4 694 448 A1**

## Description

### TECHNICAL FIELD

The present disclosure relates to the field of communication technologies, and particularly to a method and an apparatus for determining a transmission resource, and a storage medium.

### BACKGROUND

In a current communication system, a resource block group (RBG) used for communication transmission between a base station and a terminal may only be all utilized for uplink (UL) transmission or downlink (DL) transmission. In a Rel-18 sub-band based full duplex (SBFD) technology, the base station is allowed to configure an UL subband for uplink transmission on a semi-static DL symbol or a flexible symbol. For downlink transmission, part of resources within a DL bandwidth part (BWP) may not be used for downlink transmission. For uplink transmission, an available resource of the UL subband is generally different from that of an UL BWP. Based on the aforementioned reasons, in a case that an UL RBG and a DL RBG are still determined separately within the UL BWP and the DL BWP based on a current manner, it will result in that all RBs within the RBG across the subband are not able to be used for data transmission, thereby causing low utilization efficiency of a transmission resource and slow information transmission speed. In related technologies, there is no implementation scheme of enabling the available resource within the RBG to be used for the data transmission by determining the transmission resource.

### SUMMARY

A resource transmission determination method and apparatus, and a storage medium provided in the present disclosure are used to determine a transmission resource of a working channel, in order to utilize an available resource within a resource block group (RBG) for data transmission.

In a first aspect, embodiments of the present disclosure provide a method for determining a transmission resource, performed by a user equipment (UE), including: determining, based on a protocol agreement or indication information sent by a network device, a resource block group (RBG) in a downlink slot or a flexible slot configured with an uplink subband.

In some embodiments of the present disclosure, determining, based on the protocol agreement or the indication information sent by the network device, the RBG in the downlink slot or the flexible slot configured with the uplink subband includes: receiving RBG configuration information sent by the network device; and determining a count and size of the RBG within a range of a bandwidth part (BWP) based on bandwidth information of the BWP and the RBG configuration information.

In some embodiments of the present disclosure, the RBG includes a first resource block (RB), and the method further includes: determining the first RB based on the count and the size of the RBG, in which the first RB is within a downlink RBG; and receiving downlink data or a downlink channel using the first RB.

In some embodiments of the present disclosure, determining the first RB based on the count and the size of the RBG includes: determining an RB that meets a first condition as the first RB, in which the first condition is that the RB does not overlap with the uplink subband or a guard band.

In some embodiments of the present disclosure, the RBG includes a second resource block (RB), and the method further includes: determining the second RB based on the count and the size of the RBG, in which the second RB is within the uplink subband; and sending uplink data or an uplink channel using the second RB.

In some embodiments of the present disclosure, determining the second RB based on the count and the size of the RBG includes: determining an RB that meets a second condition as the second RB, in which the second condition is that the RB does not overlap with a guard band or a downlink subband.

In some embodiments of the present disclosure, determining, based on the protocol agreement or the indication information sent by the network device, the RBG in the downlink slot or the flexible slot configured with the uplink subband includes: receiving subband indication information and RBG configuration information sent by the network device; and determining a count and size of the RBG within a range of a subband indicated by the subband indication information based on a size of the subband indicated by the subband indication information and the RBG configuration information.

In some embodiments of the present disclosure, determining, based on the protocol agreement or the indication information sent by the network device, the RBG in the downlink slot or the flexible slot configured with the uplink subband includes: receiving subband indication information, guard band indication information and RBG configuration information sent by the network device; and determining a count and size of the RBG within a range of a subband indicated by the subband indication information and a guard band indicated by the guard band indication information based on a size of the subband, a size of the guard band and the RBG configuration information.

In some embodiments of the present disclosure, determining, based on the indication information sent by the network device, the RBG in the downlink slot or the flexible slot configured with the uplink subband includes: determining a resource determination manner based on the indication information sent by the network device; and determining, based on the resource determination manner, the RBG in the downlink slot or the flexible slot configured with the uplink subband.

In some embodiments of the present disclosure, the method further includes: receiving the indication information sent by the network device; in which the indication information indicates an RBG determination manner.

In a second aspect, embodiments of the present disclosure provide a method for determining a transmission resource, performed by a network device, including: determining, based on a protocol agreement or relevant indication information, a resource block group (RBG) in a downlink slot or a flexible slot configured with an uplink subband.

In some embodiments of the present disclosure, determining, based on the protocol agreement or the relevant indication information, the RBG in the downlink slot or the flexible slot configured with the uplink subband includes: determining a count and size of the RBG within a range of a bandwidth part (BWP) based on bandwidth information of the BWP and RBG configuration information.

In some embodiments of the present disclosure, the RBG includes a first resource block (RB), and the method further includes: determining the first RB based on the count and the size of the RBG, in which the first RB is within a downlink RBG; and sending downlink data or a downlink channel using the first RB.

In some embodiments of the present disclosure, determining the first RB based on the count and the size of the RBG includes: determining an RB that meets a first condition as the first RB, in which the first condition is that the RB does not overlap with the uplink subband or a guard band.

In some embodiments of the present disclosure, the method further includes: sending the RBG configuration information to a user equipment (UE).

In some embodiments of the present disclosure, the RBG includes a second resource block (RB), and the method further includes: determining the second RB based on the count and the size of the RBG, in which the second RB is within the uplink subband; and receiving uplink data or an uplink channel using the second RB.

In some embodiments of the present disclosure, determining the second RB based on the count and the size of the RBG includes: determining an RB that meets a second condition as the second RB, in which the second condition is that the RB does not overlap with a guard band or a downlink subband.

In some embodiments of the present disclosure, determining, based on the protocol agreement or the relevant indication information, the RBG in the downlink slot or the flexible slot configured with the uplink subband includes: determining a count and size of the RBG within a range of a subband based on a size of the subband and RBG configuration information.

In some embodiments of the present disclosure, determining, based on the protocol agreement or the relevant indication information, the RBG in the downlink slot or the flexible slot configured with the uplink subband includes: determining a count and size of the RBG within a range of a subband and a guard band based on a size of the subband, a size of the guard band and RBG configuration information.

In some embodiments of the present disclosure, the method further includes: sending subband indication information, guard band indication information and the RBG configuration information to the UE; in which the subband indication information indicates the subband and the guard band indication information indicates the guard band.

In some embodiments of the present disclosure, determining, based on the protocol agreement or the relevant indication information, the RBG in the downlink slot or the flexible slot configured with the uplink subband includes: determining a resource determination manner based on the relevant indication information; and determining, based on the resource determination manner, the RBG in the downlink slot or the flexible slot configured with the uplink subband.

In some embodiments of the present disclosure, the method further includes: sending indication information to the UE; in which the indication information indicates an RBG determination manner.

In a third aspect, embodiments of the present disclosure provide an apparatus for determining a transmission resource, applied to a user equipment (UE), including:
a determining unit, configured to determine, based on a protocol agreement or indication information sent by a network device, a resource block group (RBG) in a downlink slot or a flexible slot configured with an uplink subband.

In a fourth aspect, embodiments of the present disclosure provide an apparatus for determining a transmission resource, applied to a network device, including:
a determining unit, configured to determine, based on a protocol agreement or relevant indication information, a resource block group (RBG) in a downlink slot or a flexible slot configured with an uplink subband.

In a fifth aspect, embodiments of the present disclosure provide a communication apparatus, including a processor and a memory, in which a computer program is stored on the memory and runnable on the processor to enable the apparatus to perform a method according to any one of the first aspect or the second aspect.

In a sixth aspect, embodiments of the present disclosure provide a communication apparatus, including a processor and interface circuit, in which the interface circuit is configured to receive code instructions and transmit the code instructions to the processor; and the processor is configured to execute the code instructions to cause the communication apparatus to perform a method according to any one of the first aspect or the second aspect.

In a seventh aspect, embodiments of the present disclosure provide a computer-readable storage medium, in which an instruction is stored on the computer-readable storage medium, and when the instruction is executed, a method according to any one of the first aspect or the second aspect is implemented.

In an eighth aspect, embodiments of the present disclosure provide a computer program product including a computer program, when the computer program is executed on a computer, a method according to any one of the first aspect or the second aspect is implemented.

In a ninth aspect, embodiments of the present disclosure provide a communication system, including a user equipment (UE) and a network device, in which

the UE is configured to perform a method in the first aspect; and
the network device is configured to perform a method in the second aspect.

In conclusion, a method for determining a transmission resource provided in the embodiments of the present disclosure, performed by a user equipment (UE), includes: determining, based on a protocol agreement or indication information sent by a network device, a resource block group (RBG) in a downlink slot or a flexible slot configured with an uplink subband. In this way, by determining a transmission resource of a working channel, an available resource within an RBG is used for data transmission, thus improving the utilization efficiency of the transmission resource and achieving rapid information transmission between a base station and a terminal.

## BRIEF DESCRIPTION OF THE DRAWINGS

These and other aspects and advantages of embodiments of the present disclosure will become apparent and more readily appreciated from the following descriptions made with reference to the drawings, in which:

FIG. 1 is a flowchart illustrating a method for determining a transmission resource provided in an embodiment of the present disclosure;
FIG. 2 is a flowchart illustrating a method for determining a transmission resource provided in an embodiment of the present disclosure;
FIG. 3 is a flowchart illustrating a method for determining a transmission resource provided in an embodiment of the present disclosure;
FIG. 4 is a flowchart illustrating a method for determining a transmission resource provided in an embodiment of the present disclosure;
FIG. 5 is a flowchart illustrating a method for determining a transmission resource provided in an embodiment of the present disclosure;
FIG. 6 is a flowchart illustrating a method for determining a transmission resource provided in an embodiment of the present disclosure;
FIG. 7 is a flowchart illustrating a method for determining a transmission resource provided in an embodiment of the present disclosure;
FIG. 8 is a flowchart illustrating a method for determining a transmission resource provided in an embodiment of the present disclosure;
FIG. 9 is a flowchart illustrating a method for determining a transmission resource provided in an embodiment of the present disclosure;
FIG. 10 is a flowchart illustrating a method for determining a transmission resource provided in an embodiment of the present disclosure;
FIG. 11 is a flowchart illustrating a method for determining a transmission resource provided in an embodiment of the present disclosure;
FIG. 12 is a flowchart illustrating a method for determining a transmission resource provided in an embodiment of the present disclosure;
FIG. 13 is a flowchart illustrating a method for determining a transmission resource provided in an embodiment of the present disclosure;
FIG. 14 is a flowchart illustrating a method for determining a transmission resource provided in an embodiment of the present disclosure;
FIG. 15 is a flowchart illustrating a method for determining a transmission resource provided in an embodiment of the present disclosure;
FIG. 16 is a flowchart illustrating a method for determining a transmission resource provided in an embodiment of the present disclosure;
FIG. 17 is a flowchart illustrating a method for determining a transmission resource provided in an embodiment of the present disclosure;

FIG. 18 is a flowchart illustrating a method for determining a transmission resource provided in an embodiment of the present disclosure;

FIG. 19 is a flowchart illustrating a method for determining a transmission resource provided in an embodiment of the present disclosure;

FIG. 20 is a flowchart illustrating a method for determining a transmission resource provided in an embodiment of the present disclosure;

FIG. 21 is a flowchart illustrating a method for determining a transmission resource provided in an embodiment of the present disclosure;

FIG. 22 is a flowchart illustrating an interaction method for determining a transmission resource provided in an embodiment of the present disclosure;

FIG. 23 is a block diagram illustrating an apparatus for determining a transmission resource provided in an embodiment of the present disclosure;

FIG. 24 is a block diagram illustrating an apparatus for determining a transmission resource provided in an embodiment of the present disclosure;

FIG. 25 is a block diagram illustrating an apparatus for determining a transmission resource provided in an embodiment of the present disclosure;

FIG. 26 is a block diagram illustrating an apparatus for determining a transmission resource provided in an embodiment of the present disclosure;

FIG. 27 is a block diagram illustrating a communication apparatus provided in an embodiment of the present disclosure;

FIG. 28 is a block diagram illustrating a communication apparatus provided in an embodiment of the present disclosure, which is a chip or a chip system;

FIG. 29 is a block diagram illustrating a communication system provided in an embodiment of the present disclosure.

## DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terms used in the embodiments of the present disclosure are merely for the purpose of describing a particular embodiment and are not intended to limit an embodiment of the present disclosure. The terms "a" and "the" in the singular form as used in the embodiments of the present disclosure and the accompanying claims are also intended to include the majority form, unless the context clearly indicates otherwise. It should also be understood that the term "and/or" as used herein refers to and encompasses any or all possible combinations of one or more associated listed items.

It is understood that although the terms first, second, third, etc. may be used to describe various information in the embodiments of the present disclosure, such information should not be limited to these terms. These terms are used only to distinguish the same type of information from one to another. For example, without leaving the scope of the present disclosure, the first information may also be referred to as the second information, and similarly, the second information may also be referred to as the first information. Depending on the context, the words "if" used here can be interpreted as "in case where...", "when..." or "in response to determining".

The following describes the embodiments of the present disclosure in detail. Examples of the embodiments are shown in the attached drawings, in which the same or similar labels represent the same or similar elements from beginning to end. The embodiments described below with reference to the attached drawings are exemplary and intended to explain the present disclosure, and should not be construed as limitations of the present disclosure.

For ease of understanding, terms involved in the disclosure are introduced first.

1. Resource Allocation Type 0 (RA Type0)

RA Type 0 is a resource allocation mode for a physical downlink shared channel (PDSCH) and a physical uplink shared channel (PUSCH). This resource allocation mode indicates a resource occupied by the PDSCH in a frequency domain through a bitmap, and may also indicate non-contiguous frequency domain resources. In the current protocol, the RBG division of the RA Type 0 needs to be determined within a range of a bandwidth part (BWP).

2. Resource Allocation Type 1 (RA Type1)

RA Type 1 is a resource allocation mode for a PDSCH and a PUSCH. This resource allocation mode indicates a starting position and length of a frequency domain resource occupied by PDSCH transmission through a joint encoding approach. This mode may indicate L consecutive virtual resource blocks (VRBs). There are two ways of mapping from a virtual resource block to a physical resource block (PRB): interleaving and non-interleaving. In a case that using the interleaving mapping, a mapping relationship from the VRB to the PRB is determined by a sub-block interleaver.

To facilitate the explanation of the embodiments described in the present disclosure, the present disclosure assumes that a terminal is a terminal in the Rel-18 and subsequent version, having a half-duplex capability or a full-duplex capability. The present disclosure does not make any restrictions. It is assumed that a base station performs a full-duplex operation within a downlink slot of a time division duplexing (TDD) frequency band. That is, downlink data and uplink data are scheduled simultaneously. In a case that the base station performs the full-duplex operation, one of the following methods is adopted, and the present disclosure does not make any restrictions either.

Frequency domain resources used for downlink transmission or uplink transmission within the downlink (DL) slot are independent of each other and do not overlap with each other;

the frequency domain resources used for the downlink transmission and the uplink transmission within the downlink slot are completely overlapped; or
the frequency domain resources used for the downlink transmission and the uplink transmission within the downlink slot are partially overlapped.

It should be understood that the communication system in the embodiments of the present disclosure aims to more clearly illustrate the technical solution of the embodiments of the present disclosure, and does not constitute a limitation on the technical solution in the embodiments of the present disclosure. Those skilled in the art may know, with the evolution of the system architecture and the emergence of new service scenarios, the technical solution in the embodiments of the present disclosure is also applicable to similar technical problems.

A method and apparatus for determining a transmission resource, a device and a storage medium provided by the embodiments of the present disclosure will be described in detail with reference to the attached figures. The method may be applied to a fifth generation (5G) mobile communication technology and its subsequent communication technologies, such as 5G-advanced evolution, a sixth generation (6G) mobile communication technology, etc., which is not limited in the present disclosure.

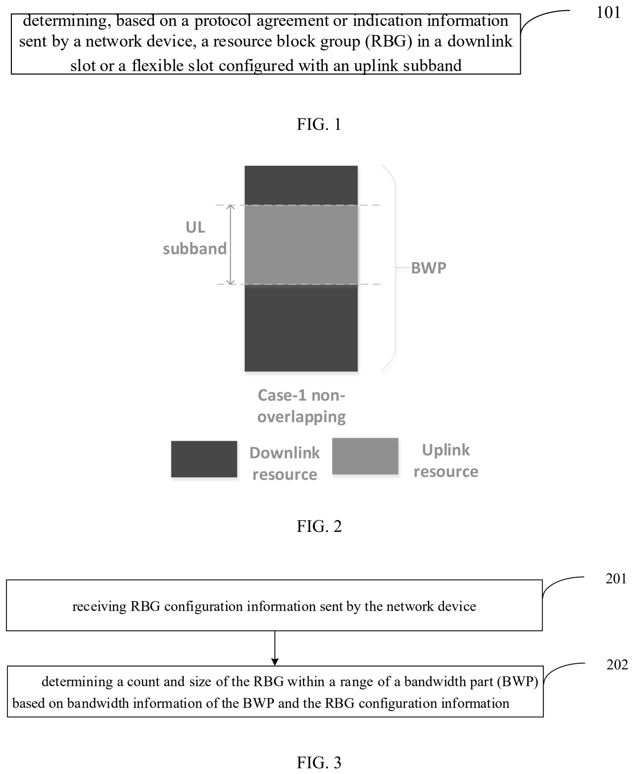

FIG. 1 is a flowchart illustrating a method for determining a transmission resource provided in an embodiment of the present disclosure. The method is performed by a user equipment (UE). As shown in FIG. 1, the method for determining a transmission resource may include the following steps.

Step 101, a resource block group (RBG) in a downlink slot or a flexible slot configured with an uplink subband is determined based on a protocol agreement or indication information sent by a network device.

In the embodiments of the present disclosure, each RBG may include one or more resource blocks (RBs), in which the RB may be a physical resource block (PRB).

In some embodiments of the present disclosure, a network device may configure, for a full-duplex UE, an uplink subband for uplink data transmission within the downlink slot (or the flexible slot), and schedule the uplink data transmission of the UE within a time-frequency range of the uplink subband. In this case, a downlink resource in the downlink slot may be divided into discontinuous two or more segments by the uplink subband. For example, downlink (DL) and uplink (UL) use different frequency domain resources to transmit corresponding data or signals within the downlink slot, and since the uplink subband is configured in an active DL BWP, resources available for downlink transmission are discontinuous, as shown in FIG. 2.

Accordingly, the RBG in the downlink slot (or the flexible slot) may be determined in the embodiments of the present disclosure. The downlink slot or the flexible slot is configured with the uplink subband. That is, the downlink slot or the flexible slot includes both the uplink subband and the downlink subband, so that frequency domain resource division may be performed within the uplink subband and the downlink subband.

In some embodiments of the present disclosure, the UE may determine the RBG in the downlink slot (or the flexible slot) based on the protocol agreement or predefinition. The UE may also determine the RBG in the downlink slot (or the flexible slot) in response to indication information sent by the network device.

In some embodiments of the present disclosure, the manner in which the UE determines the RBG may include but is not limited to at least one of the following.

1) The UE may determine the RBG within a range of a BWP.

The UE may determine a DL RBG within a range of a DL BWP and determine an UL RBG within a range of an UL BWP. For an edge RBG (that is, a RBG spanning across subbands, for example, including a downlink RBG that overlaps with the uplink subband or a guard band, or an uplink RBG that overlaps with the downlink subband or the guard band), the UE may use an RB in the downlink RBG that overlaps with the downlink subband for downlink transmission, while an RB that overlaps with the uplink subband (or considering the guard band simultaneously) is not used for downlink transmission. Similarly, the UE may use an RB in the uplink RBG that overlaps with the uplink subband for uplink transmission, while an RB that overlaps with the downlink subband (or considering the guard band simultaneously) is not used for uplink transmission.

2) The UE may determine the RBG within a range of a subband.

The UE may divide the RBG within a range of the downlink subband, that is, determine the downlink RBG. The UE may divide the RBG within a range of the uplink subband, that is, determine the uplink RBG.

The subband may be indicated by the network device, which is not limited in the present disclosure.

3) The UE may determine the RBG within a range of a subband and a guard band.

The UE may divide the RBG within the range of the downlink subband and the guard band, that is, determine the downlink RBG. The UE may divide the RBG within the range of the uplink subband and the guard band, that is, determine the uplink RBG.

It should be understood that the above manners 1), 2), and 3) may be the agreed-upon methods in the protocol. That is, the protocol stipulates how to determine the RBG, then the UE may determine the RBG in accordance with the agreed-upon method in the protocol.

4) The UE may determine the RBG in a corresponding resource determination manner based on a specific identifier of the resource determination manner.

The identifier of the resource determination manner may be indicated by the network device or other devices, or pre-determined, which is not limited in the present disclosure.

The identifier of the resource determination manner may identify any of the manners listed in 1), 2), and 3), or other manners not listed here, which is not limited here. It should be understood that the RBG described in the embodiments of the present disclosure may be regarded as an available RBG. In a possible embodiment, in a case that there is a conflict of an unavailable resource in the RBG, such as a reserved resource, then this RBG is not used for downlink transmission.

It should be understood that the RBG determination manner may also include other manners. Regardless of which manner is used to determine the RBG, it may solve the problem of low resource utilization caused by the unavailability of the edge RBG across the subband.

In conclusion, the method for determining a transmission resource provided in the embodiments of the present disclosure, performed by a user equipment (UE), includes: determining, based on a protocol agreement or indication information sent by a network device, a resource block group (RBG) in a downlink slot or a flexible slot configured with an uplink subband, so as to address the issue of low resource utilization caused by the unavailability of some edge RBGs across subbands in the downlink slot or the flexible slot configured with the uplink subband, and to improve the utilization of the downlink resource.

FIG. 3 is a flowchart illustrating a method for determining a transmission resource provided in an embodiment of the present disclosure. The method is performed by a user equipment (UE). Based on the embodiment shown in FIG. 1, a detailed description of step 101 is provided. The method for determining a transmission resource may include the following steps.

Step 201, RBG configuration information sent by the network device is received.

In some embodiments of the present disclosure, the UE may receive the RBG configuration information sent by the network device. The RBG configuration information may be used to identify an RBG configuration type. The RBG configuration information may include RBG configuration#1, RBG configuration#2, and other configuration types, which is not limited in the present disclosure. The RBG configuration information may be used to determine a count and size of the RBG.

Step 202, a count and size of the RBG is determined within a range of a bandwidth part (BWP) based on bandwidth information of the BWP and the RBG configuration information.

In some embodiments of the present disclosure, the UE may determine the count and the size of the corresponding RBG based on the bandwidth information of the BWP and the RBG configuration information, and divide the RBG within the range of the BWP.

In some embodiments of the present disclosure, the BWP may be understood as continuous RB resources in a frequency domain. The relevant configuration information of the BWP may be indicated by the network device, which may include bandwidth information of the BWP, such as occupying 64 RBs. The relevant configuration information of the BWP may also include other information, such as subcarrier space (SCS), etc. These details will not be elaborated here. The relevant configuration information of the BWP may be configured through RRC signaling or other signaling, which will not be elaborated here either.

It should be understood that the range of the BWP described in the present disclosure may be regarded as a range that starts from a frequency domain starting position of the BWP and occupies a certain number of RBs. For example, in a case that a starting common resource block (CRB) of the DL BWP is CRB#0 and the DL BWP occupies 64 RBs, then this range is the range of the DL BWP. The RBG may be divided within the range of the DL BWP in the technical solution of the present disclosure. The range of the BWP does not exceed a bandwidth range of a current carrier.

In an optional embodiment, the UE may determine the DL RBG within the range of the DL BWP. In an optional embodiment, the UE may determine the UL RBG within the range of the UL BWP.

In the embodiment below, determination of the DL RBG within the range of the DL BWP is illustrated as an example.

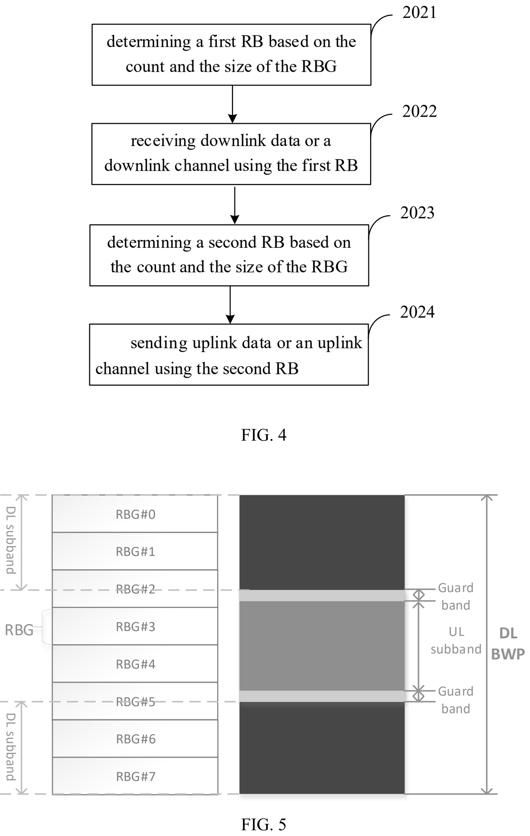

Assuming that the starting common resource block (CRB) of the DL BWP is the CRB#0 and the DL BWP occupies 64 RBs, the UE determines the RBG still based on the DL BWP and relevant configuration. Assuming that the RBG configuration information is the RBG configuration#2, and a RGB configuration table is as shown in Table 1, then based on the DL BWP bandwidth (that is, the BWP size in Table 1), the size of the RBG is 8 RBs. As shown in FIG. 5, RBG#0 to RBG#7 are distributed within the range of the DL BWP. The BWP configuration in this embodiment is only for the convenience of explaining the content of the technical solution. Any other BWP configuration that complies with the protocol definition may also be applicable to the method disclosed by the present disclosure.

Table 1 RGB configuration table

| BWP size | configuration 1 | configuration 2 |
|----------|-----------------|-----------------|
| 1-36     | 2               | 4               |
| 37-72    | 4               | 8               |
| 73-144   | 8               | 16              |
| 145-275  | 16              | 16              |

As shown in FIG. 5, RBG#2 and RBG#5 are RBGs across subband boundaries. Such RBGs may be referred to as edge RBGs. The UE may use an RB in the downlink RBG that overlaps with the downlink subband for downlink transmission, while an RB that overlaps with the uplink subband (or considering the guard band simultaneously) is not used for downlink transmission. Similarly, the UE may use an RB in the uplink RBG that overlaps with the uplink subband for uplink transmission, while an RB that overlaps with the downlink subband (or considering the guard band simultaneously) is not used for uplink transmission. Whether to consider the guard band may be determined based on whether the guard band may be used for the downlink transmission. For example, whether the guard band may be used for the downlink transmission may be indicated by the network device.

In the embodiments, the RB used for the uplink transmission and the RB used for the downlink transmission in the edge RBGs may be determined in different ways. The following is described by considering the guard band.

In optional embodiments, step 201 may include the following steps.

Step 2021, a first RB is determined based on the count and the size of the RBG.

The first RB is used for downlink transmission.

In some embodiments of the present disclosure, the UE may determine the first RB based on the count and the size of the RBG to receive downlink data or a downlink channel.

In some embodiments of the present disclosure, the first RB is within a downlink RBG.

Specifically, an RB that meets a first condition is determined as the first RB. The first condition is that the RB does not overlap with the uplink subband or a guard band. That is, the first RB includes an RB within the downlink subband, but does not include an RB within either the uplink subband or the guard band.

Taking FIG. 5 as an example, assume that a frequency domain resource range occupied by the uplink subband is CRB#22-CRB#41, the guard band occupies 2 RBs, and RBG#2 and RBG#5 contain some RBs outside the downlink subband. Taking RBG#2 as an example, RBs contained in RBG#2 are RB#16-RB#23, in which RB#20-RB#23 are outside the downlink subband. Similarly, it may be determined that RB#34-RB#37 in RBG#5 are outside the downlink subband. Therefore, in this embodiment, the first RB includes all the RBs in RGB#0, RGB#1, RGB#3, RGB#4, RGB#5 and RGB#6, as well as RB#20-RB#23 in RGB#2 and RB#34-RB#37 in RGB#5. This embodiment does not impose any restrictions on the indication method of the guard band.

In some embodiments of the present disclosure, whether to consider the guard band may be determined based on whether the guard band may be used for downlink transmission. For example, in a case that the guard band may be used for the downlink transmission, then an RB within the RBG that is located at the boundary of the guard band and overlaps with the downlink subband resource also belongs to the first RB.

In some embodiments of the present disclosure, there may be no guard band between the downlink subband and the uplink subband, which is not limited in the present disclosure.

Step 2022, downlink data or a downlink channel is received using the first RB.

In some embodiments of the present disclosure, the UE may use the first RB to receive the downlink data or the downlink channel, thereby achieving efficient utilization of the RBG. The first RB used for receiving the downlink data or the downlink channel may be all or a part of the first RB, depending on a relevant protocol agreement or indication information.

Specifically, in an optional embodiment, based on FIG. 5, the base station instructs the UE to receive PDSCH on RBG#0, RBG#1 and RBG#2. Since some of resources within RBG#2 are located outside the downlink subband, in this case, all RBs in RBG#0 and RBG#1, as well as RB#16, RB#17, RB#18 and RB#19 in RBG#2, may be used for the downlink transmission.

In some embodiments of the present disclosure, an RB within the RBG that is located at the guard band boundary and overlaps with the downlink subband resource may still be used for the downlink transmission. For example, based on the embodiment in FIG. 5, the first RB used for PDSCH transmission may include RBG#0, the RB(s) in RBG#1, and RB#16, RB#17, RB#18, RB#19, RB#20, and RB#21 in RBG#2.

In optional embodiments, step 201 may include the following steps, as shown in FIG. 4.

Step 2023, a second RB is determined based on the count and the size of the RBG.

In some embodiments of the present disclosure, the UE determines the second RB based on the count and the size of the RBG to send uplink data or an uplink channel.

In some embodiments of the present disclosure, the second RB is within the uplink subband.

Specifically, an RB that meets a second condition is determined as the second RB, in which the second condition is that the RB does not overlap with a guard band and a downlink subband, that is, all RBs within the RGB that are located in the uplink subband, as well as an RB that is located in the uplink subband and is within the RGB where the uplink subband overlaps with the downlink subband and where the uplink subband overlaps with the guard band.

The principle of the step is the same as that of step 203. For the relevant descriptions, reference may be made to the above embodiments, which are not elaborated here.

Step 2024, the uplink data or the uplink channel is sent using the second RB.

In some embodiments of the present disclosure, the UE may use the second RB to send the uplink data or the uplink channel, thereby achieving efficient utilization of the RBG. The second RB used for receiving the uplink data or the uplink channel may be all or a part of the second RB, depending on a relevant protocol agreement or indication information.

The principle of the step is the same as that of step 2023. For the relevant descriptions, reference may be made to the above embodiments, which are not elaborated here. Step 2023-2024 may be optional steps, may be parallel to the steps 2021-2022, or may be executed together with the steps 2021-2022, which are not limited here.

In conclusion, the method for determining a transmission resource provided in the embodiments of the present disclosure, performed by a user equipment (UE), includes: receiving RBG configuration information sent by the network device, and determining a count and size of the RBG within a range of a bandwidth part (BWP) based on bandwidth information of the BWP and the RBG configuration information; determining a first RB based on the count and the size of the RBG, and receiving downlink data or a downlink channel using the first RB; and determining a second RB based on the count and the size of the RBG, and sending uplink data or an uplink channel using the second RB. The solution of the present disclosure achieves the utilization of a subband edge RGB by determining a position of the RB within the RGB, thereby enhancing utilization efficiency of the transmission resource.

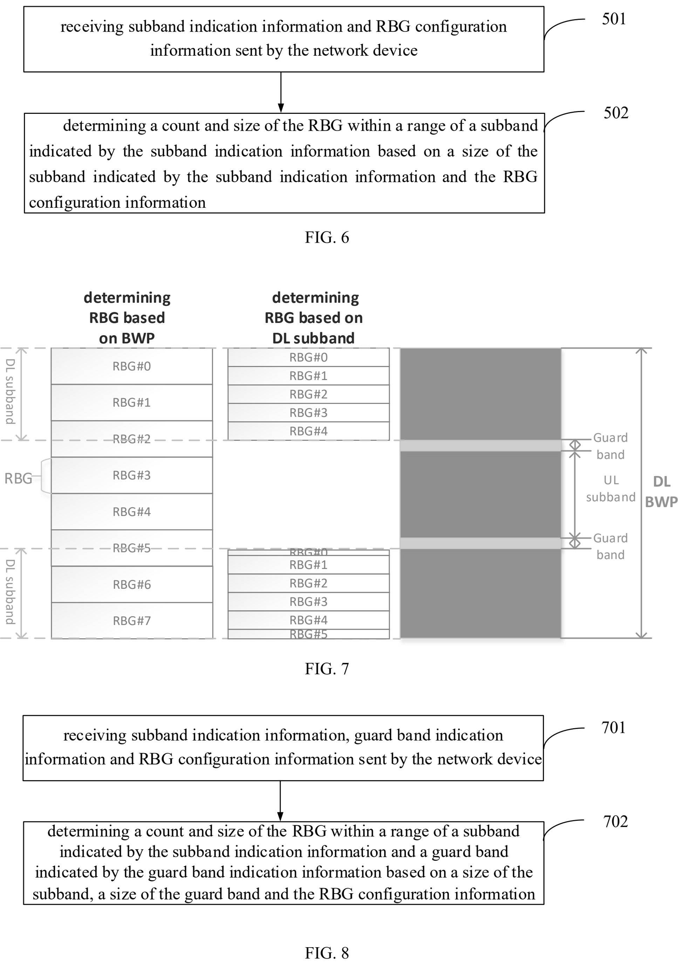

FIG. 6 is a flowchart illustrating a method for determining a transmission resource provided in an embodiment of the present disclosure. The method is performed by a user equipment (UE). The guard band is not used for the downlink transmission in the method. Based on the embodiment shown in FIG. 1, a detailed description of step 101 is provided. The method for determining a transmission resource may include the following steps.

Step 501, subband indication information and RBG configuration information sent by the network device are received.

In some embodiments of the present disclosure, the UE may receive the subband indication information and the RBG configuration information sent by the network device. The RBG configuration information may be used to identify an RBG configuration type. The RBG configuration information may include RBG configuration#1, RBG configuration#2, and other configuration types, which is not limited in the present disclosure. The RBG configuration information may be used to determine a count and size of the RBG.

In some embodiments of the present disclosure, the subband indication information may be information used to indicate the subband. For example, the subband indication information may carry an identifier or a type of the indicated subband. For example, the indicated subband is an uplink subband or a downlink subband. For example, the indicated subband is a first downlink subband or a second downlink subband, etc. in which, the first downlink subband may be the first one of downlink subbands separated by the uplink subband, and the second downlink subband may be the second one of downlink subbands separated by the uplink subband, which is not limited in the present disclosure.

Step 502, a count and size of the RBG is determined within a range of a subband indicated by the subband indication information based on a size of the subband indicated by the subband indication information and the RBG configuration information.

In some embodiments of the present disclosure, the UE determines the count and the size of the RBG based on a size of the subband indicated by the subband indication information and the RBG configuration information, and divide the RBG within the range of the subband indicated by the subband indication information.

In an optional embodiment, the subband indication information may indicate a downlink subband and the UE may determine the downlink RBG within a range of the downlink subband. In an optional embodiment, the subband indication information may indicate an uplink subband and the UE may determine the uplink RBG within a range of the uplink subband.

As shown in FIG. 7, the following embodiment is described by taking the process of determining the downlink RBG within the range of the downlink subband as an example.

In this embodiment, assume that a starting CRB of the DL BWP is CRB#0 and the DL BWP occupies 64 RBs. Of course, the BWP configuration in this embodiment is only for the purpose of facilitating the explanation of the content of the technical solution. Any other BWP configuration that conforms to the protocol definition may also be applicable to the present disclosure. In this embodiment, the UE may determine the DL RBG within a resource range occupied by the DL subband based on a size of the DL subband and relevant configuration of the base station. Since the DL subband contains 20 RBs and the base station's configuration is RBG configuration#2, then according to the above Table 1, the size of the RBG is determined to be 4 RBs.

In some embodiments of the present disclosure, the size of each RBG and the count of RBs contained in each RBG may be determined according to the following formula.

$$N_{RBG} = \left\lceil \frac{\left(N_{BWP,i}^{size} + \left(N_{BWP,i}^{start} \bmod P\right)\right)}{P} \right\rceil \quad \text{(formula 1)}$$

$N_{RBG}$ represents the count of RBGs, $N_{BWP,i}^{size}$ is replaced by the size of the downlink subband (i.e., 20 RBs), $N_{BWP,i}^{start}$ is replaced by a starting position of the downlink subband (i.e., a starting RB of the first downlink subband is RB#0, and a starting RB of the second downlink subband is RB#43), P is the size of the RBG determined through Table 1, and mod represents the modulo operation. Then, it may be determined that the count of the RBGs in the first downlink subband is 5. The size of the first RBG may be calculated by the following formula.

$$RGB_0^{size} = P - N_{BWP,i}^{start} \bmod P \quad \text{(formula 2)}$$

$RGB_0^{size}$ represents the size of the first RGB. If $\left(N_{BWP,i}^{start} + N_{BWP,i}^{size}\right) \bmod P > 0$, a size of a last RGB may be calculated using the following formula.

$$RBG_{last}^{size} = \left(N_{BWP,i}^{start} + N_{BWP,i}^{size}\right) \bmod P \quad \text{(formula 3)}$$

It may be determined that the size of the first RBG is 4 RBs, the size of the last RBG is also 4 RBs, and a size of any other RBG is 4 RBs.

Similarly, it may be determined that a count of RBGs in the second subband is 6. The size of the first RBG is 1 RB, the size of the last RBG is 3, and the size of any other RBG is also 4 RBs.

In other words, in above embodiment, the UE may determine the DL RBG within the resource range occupied by the downlink subband based on the size of the downlink subband and the relevant configuration of the base station. Since the downlink subband contains 20 RBs and the base station's configuration is RBG configuration 2, according to the above Table 1, the size of the RBG is determined to be 4 RBs. Then according to the above formulas, $N_{BWP,i}^{size}$ is replaced by the size of the downlink subband (i.e., 20 RBs), $N_{BWP,i}^{start}$ is replaced by a starting position of the downlink subband (i.e., a starting RB of the first downlink subband is RB#0, and a starting RB of the second downlink subband is RB#43). For the RBGs within the first downlink subband, it may be calculated that there are 5 RBGs within the first downlink subband, and each RBG is 4 RBs in size; that is, the size of the first RBG is 4 RBs, the size of the last RBG is 4, and the sizes of other RBGs are also 4 RBs. For the RBGs within the second downlink subband, it may be calculated that there are 6 RBGs within the downlink subband, each RBG is 4 RBs in size; in which, the size of the first RBG is 1 RB, the size of the last RBG is 3, and the sizes of other RBGs are also 4 RBs.

In conclusion, in the method for determining a transmission resource provided in the embodiments of the present disclosure, the guard band is not used for the downlink transmission and the method is performed by a user equipment (UE), including: receiving subband indication information and RBG configuration information sent by the network device; and determining a count and size of the RBG within a range of a subband indicated by the subband indication information based on a size of the subband indicated by the subband indication information and the RBG configuration information. The present disclosure's solution calculates the count of RBs in each RBG for downlink transmission based on relevant configuration information and formulas, laying the foundation for calling the corresponding RBs for transmission.

FIG. 8 is a flowchart illustrating a method for determining a transmission resource provided in an embodiment of the present disclosure. The method is performed by a user equipment (UE). The guard band is used for the downlink transmission in the method. Based on the embodiment shown in FIG. 1, a detailed description of step 101 is provided. The method for determining a transmission resource may include the following steps.

Step 701, subband indication information, guard band indication information and RBG configuration information sent by the network device are received.

In some embodiments of the present disclosure, the UE may receive the subband indication information, the guard band indication information and the RBG configuration information sent by the network device. The RBG configuration information may be used to identify an RBG configuration type. The RBG configuration information may include RBG configuration#1, RBG configuration#2, and other configuration types, which is not limited in the present disclosure. The RBG configuration information may be used to determine a count and size of the RBG.

In some embodiments of the present disclosure, the guard band indication information may be information for indicating the guard band. For example, the guard band indication information indicates an identifier or a size of the guard band, such as indicating that the guard band occupies 2 RBs, which is not limited in the present disclosure.

In some embodiments of the present disclosure, the subband indication information may be information used to indicate the subband. For example, the subband indication information may carry an identifier or a type of the indicated subband. For example, the indicated subband is an uplink subband or a downlink subband. For example, the indicated subband is a first downlink subband or a second downlink subband, etc. in which, the first downlink subband may be the first one of downlink subbands separated by the uplink subband, and the second downlink subband may be the second one of downlink subbands separated by the uplink subband, which is not limited in the present disclosure.

In some embodiments of the present disclosure, the RBG configuration information may be RBG counts corresponding to different BWP sizes. For example, in one RBG configuration, the BWP size may be 1-36, the corresponding RBG count may be 2; the BWP size may be 37-72, the corresponding RBG count may be 4. The present disclosure does not limit the RBG configuration information sent by the network device. Any RBG configuration information that conforms to the definitions of relevant protocols falls within the scope of the present disclosure.

Step 702, a count and size of the RBG is determined within a range of a subband indicated by the subband indication information and a guard band indicated by the guard band indication information based on a size of the subband, a size of the guard band and the RBG configuration information.

In some embodiments of the present disclosure, the UE determines the count and the size of the RBG within the range of the subband indicated by the subband indication information and the guard band indicated by the guard band indication information based on the size of the subband, the size of the guard band and the RBG configuration information, so as to achieve the determination and utilization of the RB within the RGB.

The specific calculation formula follows step 502, reference may be made to the aforementioned descriptions, which is not repeated here.

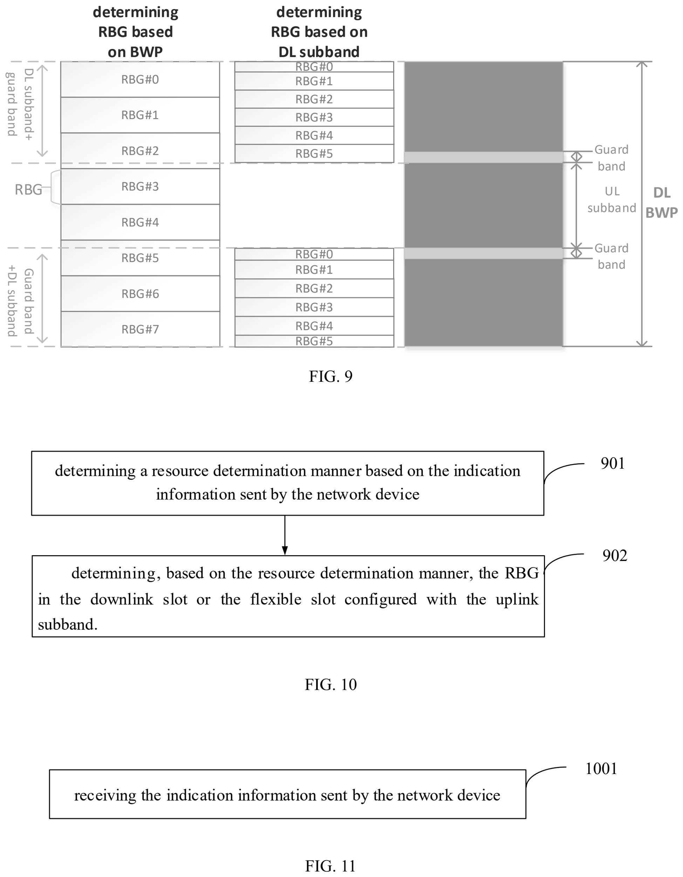

The range of the downlink subband and the guard band is taken as an example to illustrate an embodiment of the present disclosure below in conjunction with FIG. 9.

Specifically, assuming that the CRB of the DL BWP is CRB#0 and the DL BWP occupies 64 RBs, the base station and the UE determine the RBG still based on the DL BWP and relevant configuration. Assuming that the base station configures the RBG configuration#2 for the UE, and a RGB configuration table is as shown in Table 1, then based on the DL BWP bandwidth, the size of the RBG is 8 RBs. The BWP configuration in this embodiment is only for the convenience of explaining the content of the technical solution. Any other BWP configuration that complies with the protocol definition may also be applicable to the method disclosed by the present disclosure.

Based on the above assumptions, further assume that a frequency domain resource range occupied by the uplink subband is CRB#22-CRB#41, and the guard band occupies 2 RBs. The RBG, and the relationship among the uplink subband, the guard band and the downlink subband are shown in FIG. 9. Some of the RBs in RBG#2 and RBG#5 are outside the downlink subband. Taking RBG#2 as an example, the RBs contained in RBG#2 are RB#16-RB#23, in which RB#20-RB#23 are outside the downlink subband.

In the above embodiment, it is assumed that the base station and the UE may determine the DL RBG within the resource range occupied by the downlink subband based on the size of the downlink subband and the relevant configuration of the base station. Since the downlink subband contains 20 RBs and the base station's configuration is RBG configuration 2, according to the above Table 1, the size of the RBG is determined to be 4 RBs. Then according to the above formulas, $N_{BWP,i}^{size}$ is replaced by a total size of the downlink subband and the guard band (i.e., 22 RBs), $N_{BWP,i}^{start}$ is replaced by a total starting position of the downlink subband and the guard band (i.e., a total starting RB of the first downlink subband and the guard band is RB#0, and a total starting RB of the second downlink subband and the guard band is RB#431). For the RBGs within the first downlink subband, it may be calculated that the size of each RBG is 4 RBs; $N_{RBG}$ = 5, that is, there are 6 RBGs in the downlink subband, in which the size of the first RBG is 4 RBs, the size of the last RBG is 2, and the size of any other RBG is 4 RBs. For the RBGs within the second downlink subband, it may be calculated that the size of each RBG is 4 RBs; $N_{RBG}$ = 6, that is, there are 6 RBGs in the downlink subband, in which the size of the first RBG is 3 RBs, the size of the last RBG is 3, and the size of any other RBG is 4 RBs.

In conclusion, in the method for determining a transmission resource provided in the embodiments of the present disclosure, the guard band is used for the downlink transmission, and the method is performed by a user equipment (UE), including: receiving subband indication information, guard band indication information and RBG configuration information sent by the network device; and determining a count and size of the RBG within a range of a subband indicated by the subband indication information and a guard band indicated by the guard band indication information based on a size of the subband, a size of the guard band and the RBG configuration information. The present disclosure's solution calculates the count of RBs in each RBG for downlink transmission based on relevant configuration information and formulas, laying the foundation for calling the corresponding RBs for transmission.

FIG. 10 is a flowchart illustrating a method for determining a transmission resource provided in an embodiment of the present disclosure. The method is performed by a user equipment (UE). Based on the embodiment shown in FIG. 1, a detailed description of step 101 is provided. The method for determining a transmission resource may include the following steps.

Step 901, a resource determination manner is determined based on the indication information sent by the network device.

In some embodiments of the present disclosure, the UE determines, based on the indication information sent by the network device, the resource determination manner to configure the RBG.

In some embodiments of the present disclosure, the indication information may indicate an identifier of the resource determination manner, so that the UE may determine the RBG based on the mode indicated by the network device. The resource determination manner may include, but is not limited to, the following situations.

1) The UE may determine the RBG within a range of a BWP, in which all the RBGs are available RBGs. That is to say, in a case that there is a conflict of an unavailable resource in an RBG, such as the RBG is a reserved resource, then this RBG cannot be used for downlink transmission.

2) The UE may determine the RBG within a range of a BWP, following the rules as shown in the aforementioned embodiments of the FIG. 3, 4, and 5.

3) The UE may determine the RBG within a range of a subband, in which the subband is indicated by the network device, following the rules as shown in the aforementioned embodiments of the FIG. 6 and 7.

4) The UE may determine the RBG within a range of a subband and a guard band, in which the subband and the guard band are indicated by the network device, following the rules as shown in the aforementioned embodiments of the FIG. 8 and 9.

Step 902, the RBG in the downlink slot or the flexible slot configured with the uplink subband is determined based on the resource determination manner.

In some embodiments of the present disclosure, the UE may determine the RBG in the downlink slot or the flexible slot configured with the uplink subband based on the resource determination manner indicated by the network device, so as to achieve the determination and utilization of the RB within the RGB.

In some embodiments of the present disclosure, the base station may indicate an RBG determination manner through DCI, or MAC CE, or RRC signaling. The indication bits are determined based on a count of selectable determination manners, that is, ceil($\log_2$(N)), in which N is a count of the resource determination manner included in the RBG determination manner set indicated by the base station.

In conclusion, the method for determining a transmission resource provided in the embodiments of the present disclosure, performed by a user equipment (UE), includes: determining a resource determination manner based on the indication information sent by the network device; and determining, based on the resource determination manner, the RBG in the downlink slot or the flexible slot configured with the uplink subband. The present disclosure's solution calculates the count of RBs in each RBG for downlink transmission based on relevant configuration information and formulas, laying the foundation for calling the corresponding RBs for transmission.

FIG. 11 is a flowchart illustrating a method for determining a transmission resource provided in an embodiment of the present disclosure. The method is performed by a user equipment (UE). Based on the embodiment shown in FIG. 11, the method for determining a transmission resource may include the following steps.

Step 1001, the indication information sent by the network device is received.

In some embodiments of the present disclosure, the indication information indicates an RBG determination manner.

In some embodiments of the present disclosure, the UE receives the indication information sent by the network device to determine the RBG determination manner.

Specifically, as described in the embodiment shown in FIG. 10, the indication information may indicate an identifier of the resource determination manner (i.e. the RBG determination manner), so that the UE may determine the RBG based on the mode indicated by the network device. The resource determination manner may include, but is not limited to, the following situations.

1) The UE may determine the RBG within a range of a BWP, in which all the RBGs are available RBGs. That is to say, in a case that there is a conflict of an unavailable resource in an RBG, such as the RBG is a reserved resource, then this RBG cannot be used for downlink transmission.

2) The UE may determine the RBG within a range of a BWP, following the rules as shown in the aforementioned embodiments of the FIG. 3, 4, and 5.

3) The UE may determine the RBG within a range of a subband, in which the subband is indicated by the network device, following the rules as shown in the aforementioned embodiments of the FIG. 6 and 7.

4) The UE may determine the RBG within a range of a subband and a guard band, in which the subband and the guard band are indicated by the network device, following the rules as shown in the aforementioned embodiments of the FIG. 8 and 9.

In conclusion, the method for determining a transmission resource provided in the embodiments of the present disclosure, performed by a user equipment (UE), includes: receiving the indication information sent by the network device. In the solution of the present disclosure, the UE receives the indication information sent by the network device to determine the RBG determination manner, thereby enhancing utilization efficiency of the transmission resource.

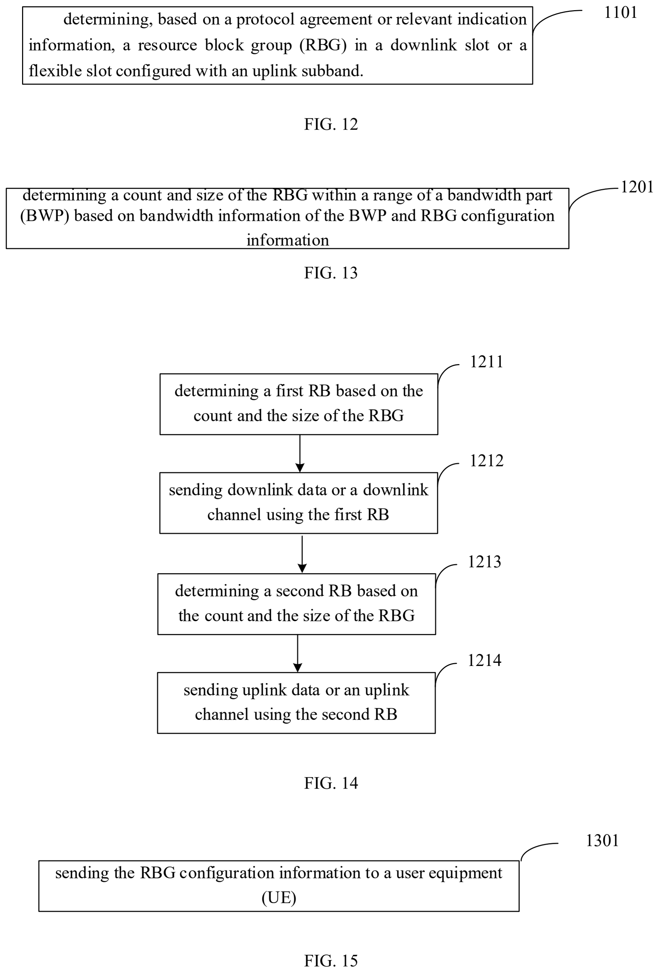

FIG. 12 is a flowchart illustrating a method for determining a transmission resource provided in an embodiment of the present disclosure. The method is performed by a network device. As shown in FIG. 12, the method for determining a transmission resource may include the following steps.

Step 1101, based on a protocol agreement or relevant indication information, a resource block group (RBG) is determined in a downlink slot or a flexible slot configured with an uplink subband.

In some embodiments of the present disclosure, the RBG may include one or more resource blocks (RBs), in which the RB may be a physical resource block (PRB).

In some embodiments of the present disclosure, a network device may configure, for a full-duplex UE, an uplink subband for uplink data transmission within the downlink slot (or the flexible slot), and schedule the uplink data transmission of the UE within a time-frequency range of the uplink subband. In this case, a downlink resource in the downlink slot may be divided into discontinuous two or more segments by the uplink subband. For example, downlink (DL) and uplink (UL) use different frequency domain resources to transmit corresponding data or signals within the downlink slot, and since the uplink subband is configured in an active DL BWP, resources available for downlink transmission are discontinuous, as shown in FIG. 2.

Accordingly, the RBG in the downlink slot (or the flexible slot) may be determined in the embodiments of the present disclosure. The downlink slot or the flexible slot is configured with the uplink subband. That is, the downlink slot or the flexible slot includes both the uplink subband and the downlink subband, so that frequency domain resource division may be performed within the uplink subband and the downlink subband.

In some embodiments of the present disclosure, the network device may determine the RBG in the downlink slot (or the flexible slot) based on the protocol agreement or predefinition. The network device may also determine the RBG in the downlink slot (or the flexible slot) based on relevant indication information.

In some embodiments of the present disclosure, the manner in which the network device determines the RBG may include but is not limited to at least one of the following.

1) The network device may determine the RBG within a range of a BWP.

The network device may determine a DL RBG within a range of a DL BWP and determine an UL RBG within a range of an UL BWP. For an edge RBG (that is, a RBG spanning across subbands, for example, including a downlink RBG that overlaps with the uplink subband or a guard band, or an uplink RBG that overlaps with the downlink subband or the guard band), the UE may use an RB in the downlink RBG that overlaps with the downlink subband for downlink transmission, while an RB that overlaps with the uplink subband (or considering the guard band simultaneously) is not used for downlink transmission. Similarly, the network device may use an RB in the uplink RBG that overlaps with the uplink subband for uplink transmission, while an RB that overlap with the downlink subband (or considering the guard band simultaneously) is not used for uplink transmission.

2) The network device may determine the RBG within a range of a subband.

The network device may divide the RBG within the range of a downlink subband, that is, determine the downlink RBG. The network device may divide the RBG within the range of an uplink subband, that is, determine the uplink RBG.

The subband may be determined by relevant indication, which is not limited in the present disclosure.

3) The network device may determine the RBG within a range of a subband and a guard band.

The network device may divide the RBG within the range of a downlink subband and the guard band, that is, determine the downlink RBG. The UE may divide the RBG within the range of an uplink subband and the guard band, that is, determine the uplink RBG.

4) The network device may determine the RBG in a corresponding resource determination manner based on a specific identifier of the resource determination manner.

The identifier of the resource determination manner may be from relevant indication or indicated by other devices, or pre-determined, which is not limited in the present disclosure.

The identifier of the resource determination manner may identify any one of the above manners, or other manners not listed here, which is not limited here. It should be understood that the RBG determination manner may also include other manners. Regardless of which manner is used to determine the RBG, it may solve the problem of low resource utilization caused by the unavailability of the edge RBG across the subband.

In conclusion, the method for determining a transmission resource provided in the embodiments of the present disclosure, performed by a network device, includes: determining, based on a protocol agreement or relevant indication information, a resource block group (RBG) in a downlink slot or a flexible slot configured with an uplink subband. In the solution of the present disclosure, the RBG is determined in the downlink slot or the flexible slot configured with the uplink subband, so as to address the issue of low resource utilization caused by the unavailability of some edge RBGs across subbands in the downlink slot or the flexible slot configured with the uplink subband, and to improve the utilization of the downlink resource.

FIG. 13 is a flowchart illustrating a method for determining a transmission resource provided in an embodiment of the present disclosure. The method is performed by a network device. Based on the embodiment shown in FIG. 12, a detailed description of step 1101 is provided. The method for determining a transmission resource may include the following steps.

Step 1201, a count and size of the RBG is determined within a bandwidth part (BWP) based on bandwidth information of the BWP and RBG configuration information.

In some embodiments of the present disclosure, the network device may determine a count and size of a corresponding RBG based on the bandwidth information of the BWP and the RBG configuration information, and divide the RBG within a range of the BWP.

In an optional embodiment, the network device may determine the DL RBG within a range of the DL BWP. In an optional embodiment, the network device may determine the UL RBG within a range of the UL BWP.

In optional embodiments, step 1201 may include the following steps.

Step 1211, a first RB is determined based on the count and the size of the RBG.

Specifically, an RB that meets a first condition is determined as the first RB, in which the first condition is that the RB does not overlap with the uplink subband or a guard band.

Step 1212, downlink data or a downlink channel is received using the first RB.

Step 1213, a second RB is determined based on the count and the size of the RBG.

Specifically, an RB that meets a second condition is determined as the second RB, in which the second condition is that the RB does not overlap with a guard band or a downlink subband.

Step 1214, uplink data or an uplink channel is received using the second RB.

The relevant descriptions of steps 1211-1214 correspond to the aforementioned steps 2021-2024, reference may be made to the relevant descriptions of the above embodiments, which are not repeated here. Steps 1213-1214 may be optional steps, may be parallel to the steps 1211-1212, or may be executed together with the steps 1211-1212, which are not limited here.

In conclusion, the method for determining a transmission resource provided in the embodiments of the present disclosure, performed by a network device, includes: determining a count and size of the RBG within a range of a bandwidth part (BWP) based on bandwidth information of the BWP and RBG configuration information; determining a first RB based on the count and the size of the RBG, and sending downlink data or a downlink channel using the first RB; and determining a second RB based on the count and the size of the RBG, and receiving uplink data or an uplink channel using the second RB. The solution of the present disclosure achieves that an RGB of the overlapping parts of the subbands may be used for uplink transmission or downlink transmission by determining a position of the RB within the RGB, thereby enhancing utilization efficiency of the transmission resource.

FIG. 15 is a flowchart illustrating a method for determining a transmission resource provided in an embodiment of the present disclosure. The method is performed by a network device. Based on the embodiment shown in FIG. 13, the method for determining a transmission resource may include the following steps.

Step 1301, the RBG configuration information is sent to a user equipment (UE).

In some embodiments of the present disclosure, the network device sends the RBG configuration information to the UE. The RBG configuration information may be used to identify an RBG configuration type. The RBG configuration information may include RBG configuration#1, RBG configuration#2, and other configuration types, which is not limited in the present disclosure. The RBG configuration information may be used to determine a count and size of the RBG, so as to determine the number of RBGs in the subband and the number of RBs in the RBG.

In conclusion, the method for determining a transmission resource provided in the embodiments of the present disclosure, performed by a network device, includes: sending the RBG configuration information to a user equipment (UE). In the solution of the present disclosure, the network device sends the RBG configuration information to the UE to determine the number of the RBGs within the subband and the number of the RBs within the RBG, laying the foundation for improving utilization efficiency of the transmission resource.

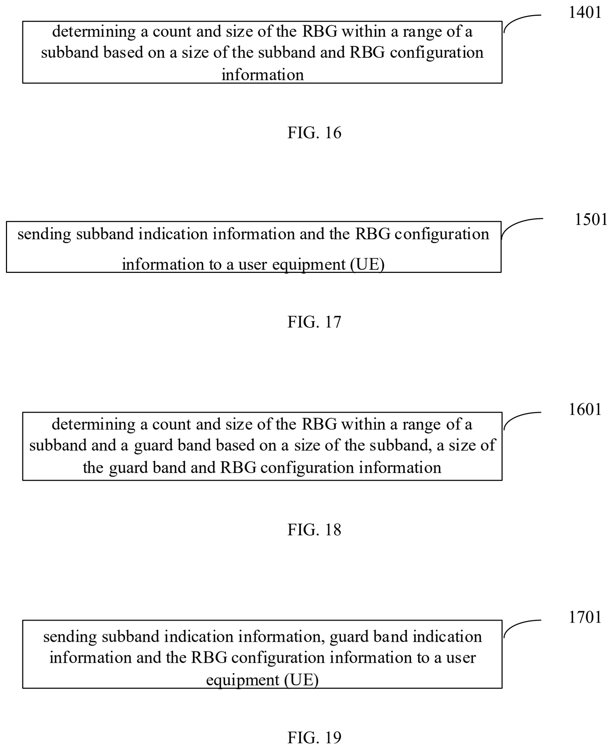

FIG. 16 is a flowchart illustrating a method for determining a transmission resource provided in an embodiment of the present disclosure. The method is performed by a user equipment (UE). The guard band is not used for the downlink transmission in the method. Based on the embodiment shown in FIG. 12, a detailed description of step 1101 is provided. The method for determining a transmission resource may include the following steps.

Step 1401, a count and size of the RBG is determined within a subband based on a size of the subband and RBG configuration information.

The principle of step 1401 is in line with that of step 502 mentioned above, reference may be made to the relevant description of step 502, which is not elaborated here.

In conclusion, in the method for determining a transmission resource is provided in the embodiments of the present disclosure, the guard band is not used for the downlink transmission, and the method is performed by a network device, including: determining a count and size of the RBG within a subband based on a size of the subband and RBG configuration information. In the solution of the present disclosure, the count and the size of the RBG are determined to determine RBs for different transmissions.

FIG. 17 is a flowchart illustrating a method for determining a transmission resource provided in an embodiment of the present disclosure. The method further includes step 1501 based on the step 1401.

Step 1501, subband indication information and the RBG configuration information are sent to a user equipment (UE);

In some embodiments of the present disclosure, the subband indication information indicates the subband.

In some embodiments of the present disclosure, the network device sends the subband indication information and the RBG configuration information to the UE, so as to determine the count and the size of the RBG, and divide the RBG within a range of the subband indicated by the subband indication information.

In an optional embodiment, the subband indication information may indicate a downlink subband and the UE may determine the downlink RBG within a range of the downlink subband. In an optional embodiment, the subband indication information may indicate an uplink subband and the UE may determine the uplink RBG within a range of the uplink subband.

In conclusion, the method for determining a transmission resource provided in the embodiments of the present disclosure, performed by a network device, includes: sending subband indication information and the RBG configuration information to the UE. In the solution of the present disclosure, by sending the subband indication information and the RBG configuration information to the UE, the UE may determine the count and the size of the RBG, laying the foundation for calling the corresponding RB for transmission.

FIG. 18 is a flowchart illustrating a method for determining a transmission resource provided in an embodiment of the present disclosure. The method is performed by a network device. The guard band is used for the downlink transmission in the method. Based on the embodiment shown in FIG. 12, a detailed description of step 1101 is provided. The method for determining a transmission resource may include the following steps.

Step 1601, a count and size of the RBG is determined within a range of a subband and a guard band based on a size of the subband, a size of the guard band and RBG configuration information.

The principle of step 1601 is in line with that of step 702 mentioned above, reference may be made to the relevant description of step 701, which will not be elaborated here.

In conclusion, in the method for determining a transmission resource is provided in the embodiments of the present disclosure, the guard band is used for the downlink transmission, and the method is performed by a network device, including: determining a count and size of the RBG within a range of a subband and a guard band based on a size of the subband, a size of the guard band and RBG configuration information. In the solution of the present disclosure, the count and the size of the RBG may be determined to determine RBs for different transmissions.

FIG. 19 is a flowchart illustrating a method for determining a transmission resource provided in an embodiment of the present disclosure. The method further includes step 1701 based on the step 1601.

Step 1701, subband indication information, guard band indication information and the RBG configuration information are sent to a user equipment (UE).

In some embodiments of the present disclosure, the network device sends the subband indication information, the guard band indication information and the RBG configuration information to the UE, so as to determine a count and size of the RBG. The RBG configuration information may be used to identify an RBG configuration type. The RBG configuration information may include RBG configuration#1, RBG configuration#2, and other configuration types, which is not limited in the present disclosure. The RBG configuration information may be used to determine the count and the size of the RBG.

In some embodiments of the present disclosure, the guard band indication information may be information for indicating the guard band. For example, the guard band indication information indicates an identifier or a size of the guard band, such as indicating that the guard band occupies 2 RBs, which is not limited in the present disclosure.

In some embodiments of the present disclosure, the subband indication information may be information used to indicate the subband. For example, the subband indication information may carry an identifier or a type of the indicated subband. For example, the indicated subband is an uplink subband or a downlink subband. For example, the indicated subband is a first downlink subband or a second downlink subband, etc. in which, the first downlink subband may be the first one of downlink subbands separated by the uplink subband, and the second downlink subband may be the second one of downlink subbands separated by the uplink subband, which is not limited in the present disclosure.

In some embodiments of the present disclosure, the RBG configuration information may be RBG counts corresponding to different BWP sizes. For example, in one RBG configuration, the BWP size may be 1-36, the corresponding RBG count may be 2; the BWP size may be37-72, the corresponding RBG count may be4. The present disclosure does not limit the RBG configuration information sent by the network device. Any RBG configuration information that conforms to the definitions of relevant protocols falls within the scope of the present disclosure.

In conclusion, the method for determining a transmission resource provided in the embodiments of the present disclosure, performed by a network device, includes: sending subband indication information, guard band indication information and the RBG configuration information to the UE. In the solution of the present disclosure, by sending the subband indication information, the guard band indication information and the RBG configuration information to the UE, the UE may determine the count and the size of the RBG, laying the foundation for calling the corresponding RB for transmission.

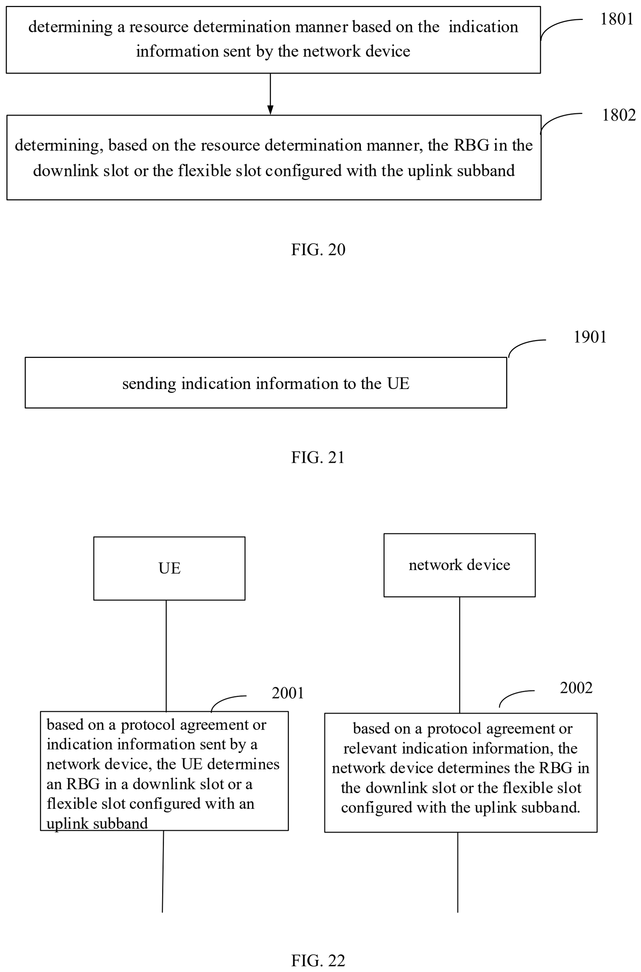

FIG. 20 is a flowchart illustrating a method for determining a transmission resource provided in an embodiment of the present disclosure. The method is performed by a network device. Based on the embodiment shown in FIG. 12, a detailed description of step 1101 is provided. The method for determining a transmission resource may include the following steps.

Step 1801, a resource determination manner is determined based on relevant indication information.

Step 1802, based on the resource determination manner, the RBG in the downlink slot or the flexible slot configured with the uplink subband is determined.

The principle of steps 1801 and 1802 is in line with that of steps 901 and 902 mentioned above, reference may be made to the relevant descriptions of steps 1801 and 1802, which will not be elaborated here.

In conclusion, the method for determining a transmission resource provided in the embodiments of the present disclosure, performed by a network device, includes: determining a resource determination manner based on the relevant indication information; and determining, based on the resource determination manner, the RBG in the downlink slot or the flexible slot configured with the uplink subband. The present disclosure's solution calculates the count of RBs in each RBG for downlink transmission based on relevant configuration information and formulas, laying the foundation for calling the corresponding RBs for transmission.

FIG. 21 is a flowchart illustrating a method for determining a transmission resource provided in an embodiment of the present disclosure. The method further includes step 1801 based on the step 1901.

Step 1901, indication information is sent to the UE.

In some embodiments of the present disclosure, the network device sends the indication information to the UE to determine an RBG determination manner.

In some embodiments of the present disclosure, the indication information indicates the RBG determination manner.

In conclusion, the method for determining a transmission resource provided in the embodiments of the present disclosure, performed by the network device, includes: sending indication information to the UE. In the solution of the present disclosure, the network device sends the indication information to the UE to determine the RBG determination manner, thereby enhancing utilization efficiency of the transmission resource.

FIG. 22 is a flowchart illustrating an interaction method for determining a transmission resource provided in an embodiment of the present disclosure. The method is performed by a user equipment (UE) and a network device. As shown in FIG. 22, the interaction method may include the following steps.

Step 2001, based on a protocol agreement or indication information sent by a network device, the UE determines a resource block group (RBG) in a downlink slot or a flexible slot configured with an uplink subband.

Step 2002, based on a protocol agreement or relevant indication information, the network device determines the RBG in the downlink slot or the flexible slot configured with the uplink subband.

The principle of the above step 2001-2002 is the same as that of each step in the aforementioned examples shown in FIG. 1-21, reference may be made to the relevant descriptions in FIG. 1-21, which will not be repeated here.

In conclusion, according to the method for determining a transmission resource provided in the embodiments of the present disclosure, by interaction between the UE and the network device, based on a protocol agreement or indication information sent by a network device, the UE determines a resource block group (RBG) in a downlink slot or a flexible slot configured with an uplink subband; and based on a protocol agreement or relevant indication information, the network device determines the RBG in the downlink slot or the flexible slot configured with the uplink subband. Thus, by determining a transmission resource of a working channel, an available resource within the RBG can be utilized for data transmission, thereby improving utilization efficiency of the resource and achieving rapid information transmission between the base station and the UE.

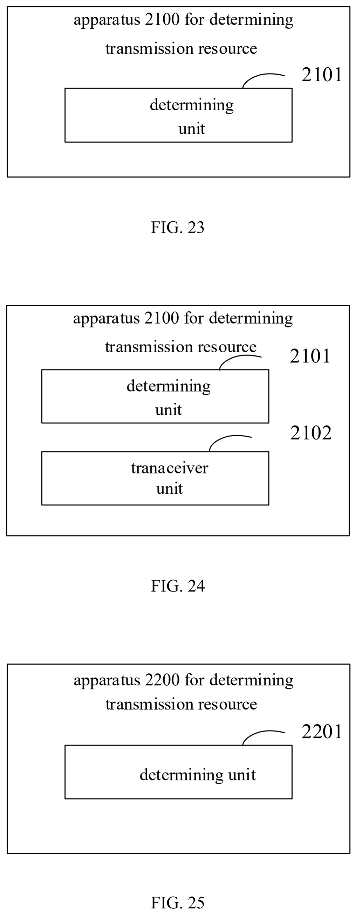

FIG. 25 is a block diagram illustrating an apparatus 2100 for determining a transmission resource provided in an embodiment of the present disclosure. The apparatus is applied to a user equipment (UE).

As shown in FIG. 25, the apparatus 2100 may include a determining unit 2101, configured to determine, based on a protocol agreement or indication information sent by a network device, a resource block group (RBG) in a downlink slot or a flexible slot configured with an uplink subband.

In conclusion, according to the apparatus for determining a transmission resource provided in an embodiment of the present disclosure, applied to the UE, the apparatus for determining a transmission resource determines, based on the protocol agreement or the indication information sent by the network device, the RBG in the downlink slot or the flexible slot configured with the uplink subband. Thereby, the present disclosure provides an apparatus for determining a transmission resource, which may determine an RBG in the overlapping parts of different subbands by determining the RBG in the downlink slot or the flexible slot configured with the uplink subband.

In some embodiments of the present disclosure, the apparatus further includes a transceiver unit 2102, configured to receive RBG configuration information sent by the network device. The determining unit 2101 is further configured to determine a count and size of the RBG within a range of a bandwidth part (BWP) based on bandwidth information of the BWP and the RBG configuration information.

In some embodiments of the present disclosure, the determining unit 2101 is further configured to determine a first RB based on the count and the size of the RBG, in which the first RB is within a downlink RBG. The transceiver unit 2102 is further configured to receive downlink data or a downlink channel using the first RB.

In some embodiments of the present disclosure, the determining unit 2101 is further configured to determine an RB that meets a first condition as the first RB, in which the first condition is that the RB does not overlap with the uplink subband or a guard band.

In some embodiments of the present disclosure, the determining unit 2101 is further configured to determine a second RB based on the count and the size of the RBG, in which the second RB is within the uplink subband. The transceiver unit 2102 is further configured to send uplink data or an uplink channel using the second RB.

In some embodiments of the present disclosure, the determining unit 2101 is further configured to determine an RB that meets a second condition as the second RB, in which the second condition is that the RB does not overlap with a guard band or a downlink subband.

In some embodiments of the present disclosure, the transceiver unit 2102 is further configured to receive subband indication information and RBG configuration information sent by the network device. The determining unit 2101 is further configured to determine a count and size of the RBG within a range of a subband indicated by the subband indication information based on a size of the subband indicated by the subband indication information and the RBG configuration information.

In some embodiments of the present disclosure, the transceiver unit 2102 is further configured to receive subband indication information, guard band indication information and RBG configuration information sent by the network device. The determining unit 2101 is further configured to determine, based on the resource determination manner, the RBG in the downlink slot or the flexible slot configured with the uplink subband.

In some embodiments of the present disclosure, the transceiver unit 2102 is further configured to receive the indication information sent by the network device; in which the indication information indicates an RBG determination manner.

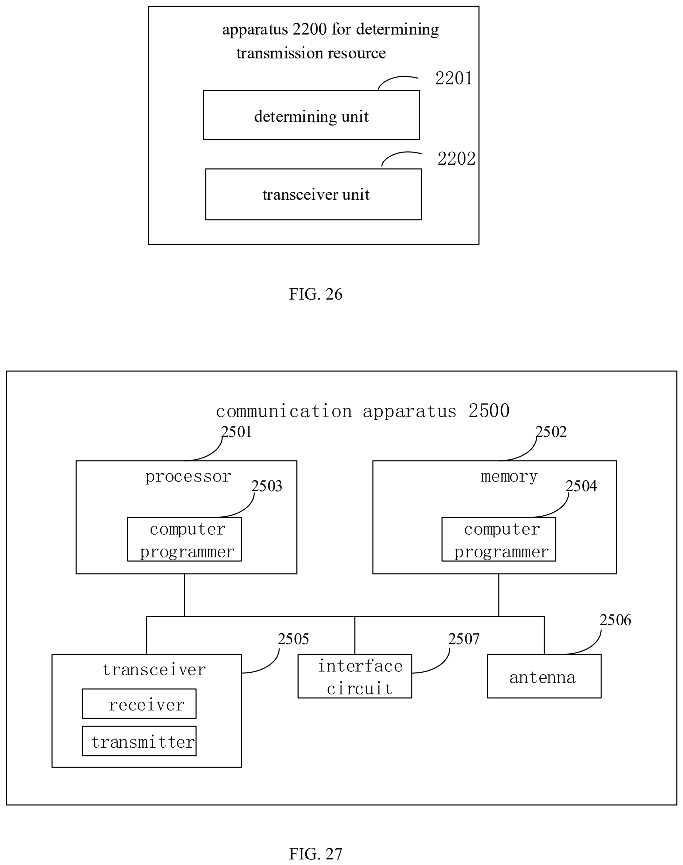

FIG. 26 is a block diagram illustrating an apparatus 2200 for determining a transmission resource provided in an embodiment of the present disclosure. The apparatus is applied to a network device.

As shown in FIG. 26, the apparatus 2200 may include a determining unit 2201, configured to determine, based on a protocol agreement or relevant indication information, a resource block group (RBG) in a downlink slot or a flexible slot configured with an uplink subband.

In conclusion, according to the apparatus for determining a transmission resource provided in an embodiment of the present disclosure, applied to the network device, the apparatus for determining a transmission resource determines, based on the protocol agreement or the relevant indication information, the RBG in the downlink slot or the flexible slot configured with the uplink subband. Thereby, the present disclosure provides an apparatus for determining a transmission resource, which may determine an RBG in the overlapping parts of different subbands by determining the RBG in the downlink slot or the flexible slot configured with the uplink subband.

In some embodiments of the present disclosure, the determining unit 2201 is further configured to determine a count and size of the RBG within a range of a bandwidth part (BWP) based on bandwidth information of the BWP and RBG configuration information.

In some embodiments of the present disclosure, the apparatus further includes a transceiver unit 2202, configured to send downlink data or a downlink channel using a first RB. In this embodiment, the determining unit 2201 is further configured to determine the first RB based on the count and the size of the RBG, in which the first RB is within a downlink RBG.

In some embodiments of the present disclosure, the determining unit 2201 is further configured to determine an RB that meets a first condition as the first RB, in which the first condition is that the RB does not overlap with the uplink subband or a guard band. The transceiver unit 2202 is further configured to send downlink data or a downlink channel using the first RB.

In some embodiments of the present disclosure, the determining unit 2201 is further configured to determine an RB that meets a first condition as the first RB, in which the first condition is that the RB does not overlap with the uplink subband or a guard band.

In some embodiments of the present disclosure, the transceiver unit 2202 is further configured to send the RBG configuration information to a user equipment (UE).

In some embodiments of the present disclosure, the determining unit 2201 is further configured to determine a second RB based on the count and the size of the RBG, in which the second RB is within the uplink subband. The transceiver unit 2202 is further configured to receive uplink data or an uplink channel using the second RB.

In some embodiments of the present disclosure, the determining unit 2201 is further configured to determine an RB that meets a second condition as the second RB, in which the second condition is that the RB does not overlap with a guard band or a downlink subband.

In some embodiments of the present disclosure, the determining unit 2201 is further configured to determine a count and size of the RBG within a range of a subband based on a size of the subband and RBG configuration information.

In some embodiments of the present disclosure, the transceiver unit 2202 is further configured to send subband indication information and the RBG configuration information to a user equipment (UE); in which the subband indication information indicates the subband.

In some embodiments of the present disclosure, the determining unit 2201 is further configured to determine a count and size of the RBG within a range of a subband and a guard band based on a size of the subband, a size of the guard band and RBG configuration information.

In some embodiments of the present disclosure, the transceiver unit 2202 is further configured to send subband indication information, guard band indication information and the RBG configuration information to a user equipment (UE); in which the subband indication information indicates the subband and the guard band indication information indicates the guard band.

In some embodiments of the present disclosure, the determining unit 2201 is further configured to determine a resource determination manner based on the relevant indication information; and determine, based on the resource determination manner, the RBG in the downlink slot or the flexible slot configured with the uplink subband.

In some embodiments of the present disclosure, the transceiver unit 2202 is further configured to send indication information to the UE; in which the indication information indicates an RBG determination manner.

As illustrated in FIG. 27, which is a diagram illustrating a structure of a communication apparatus 2000 provided in an embodiment of the present disclosure. The communication apparatus 2000 may be a network device, a terminal, a chip, a system on chip or a processor that supports the network device to implement the method, or a chip, a system on chip or a processor that supports the terminal to implement the method. The apparatus may be configured to implement the method described in the method embodiments. For details, reference may be made to the above method embodiments.

The communication apparatus 2000 may include one or more processors 2001. The processor 2001 may include a general purpose processor or a dedicated processor. For example, the processor 2001 may be a baseband processor or a central processor. The baseband processor may be configured to process a communication protocol and communication data, and the central processor may be configured to control a communication apparatus (e.g., a base station, a baseband chip, a terminal, a terminal chip, a DU or CU, etc.), to execute a computer program, and process data of the computer program.

Optionally, the communication apparatus 2000 may further include one or more memories 2002 with a computer program 2003 stored thereon. The processor 2001 executes the computer program 2003 so that the communication apparatus 2000 performs the method as described in the above method embodiments. Optionally, the memory 2002 may further store data. The communication apparatus 2000 and the memory 2002 may be independently configured or integrated together.

Optionally, the communication apparatus 2000 may further include a transceiver 2005 and an antenna 2006. The transceiver 2005 may be referred to as a transceiving unit, a transceiver or a transceiving circuit, which may be configured to achieve a transceving function. The transceiver 2005 may include a receiver and a transmitter. The receiver may be referred to as a receiver or a receiving circuit, etc., for implementing a receiving function; the transmitter may be referred to as a transmitter or a transmission circuit, etc. for implementing a transmission function.

Optionally, the communication apparatus 2000 may further include one or more interface circuits 2007. The interface circuit 2007 is configured to receive code instructions and transmit the code instructions to the processor 2001. The processor 2001 runs the code instructions so that the communication apparatus 2000 performs the method as described in the above method embodiment.

In an implementation, the processor 2001 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the processor 2001 may be stored with a computer program 2003. The computer program 2003 runs on the processor 2001 so that the communication apparatus 2000 performs the method as described in the above method embodiments. The computer program 2003 may be solidified in the processor 2001, in which case the processor 2001 may be implemented by hardware.

In an implementation, the communication apparatus 2000 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may also be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs), etc.

The communication apparatus described in the above embodiments may be a network device or a terminal (for example the terminal in the preceding embodiments of the method), but the scope of the communication apparatus described in the present disclosure is not limited thereto, and a structure of the communication apparatus may not be limited by FIG. 27. The communication apparatus may be a stand-alone device or may be a part of a larger device. For example, the communication apparatus may be:

    (1) a stand-alone integrated circuit (IC), or a chip, or a system on chip or a subsystem;
    (2) a set of one or more ICs, which, optionally, may also include a storage component configured to store data and a computer program;
    (3) an ASIC, such as a Modem;
    (4) a module that may be embedded within other devices;
    (5) a receiver, a terminal, a smart terminal, a cellular phone, a wireless device, a handset, a mobile unit, an in-vehicle device, a network device, a cloud device, an artificial intelligence device, etc.; and
    (6) others, and so forth.

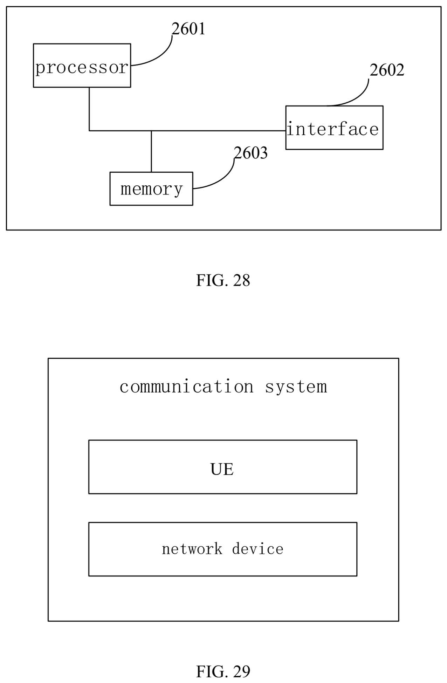

For the case that the communication apparatus may be a chip or a system on chip, please refer to a diagram of a structure of a chip as illustrated in FIG. 28. The chip illustrated in FIG. 28 may include a processor 2101 and an interface 2102. There may be one or more processors 2101, and there may be a plurality of interfaces 2102.

Optionally, the chip further includes a memory 2103. The memory 2103 is configured to save a necessary computer program and data.

Those skilled in the related art may understand that, various illustrative logical blocks and steps listed in embodiments of the present disclosure, may be implemented by an electronic hardware, a computer software or a combination of an electronic hardware and a computer software. Whether the function is implemented by the hardware or the software depends on specific applications and design requirements for an overall system. Those skilled in the art may implement the functions by using various methods for each specific application, but such an implementation should not be understood as beyond the protection scope of embodiments of the present disclosure.

A readable storage medium with instructions stored thereon is further provided in the disclosure. When the instructions are executed by a computer, steps in the any one method embodiment are implemented.

A computer program product is further provided. The computer program product implements functions of the above any one method embodiment when executed by a processor.

FIG. 29 is a block diagram illustrating a communication system provided in an embodiment of the present disclosure. The communication system includes: the UE configured to perform a method according to the above FIG. 1-12; and the network device configured to perform a method according to the above FIG. 13-21.

In the above embodiments, the functions may be wholly or partially implemented by a software, a hardware, a firmware, or any combination thereof. When implemented by a software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another in a wire (e.g., a coaxial cable, an optical fiber, a digital subscriber line (DSL)) or wireless (e.g., infrared, wireless, microwave) manner. The computer-readable storage medium may be any available medium that may be accessed by a computer or a data storage device, such as a server and a data center, that integrates one or more available media. The available media may be magnetic media (e.g., floppy disks, hard disks, magnetic tapes), optical media (e.g., high-density digital video discs (DVDs)), or semiconductor media (e.g., solid state disks, SSD)) etc.

Those skilled in the art may understand that various numbers such as first and second involved in the disclosure are distinguished merely for convenience of description, and are not intended to limit the scope of embodiments of the disclosure, but also to indicate an order of precedence.

At least one in the present disclosure may also be described as one or more, and a plurality of may be two, three, four or more, which is not limited in the present disclosure. In embodiments of the present disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Corresponding relationships indicated by tables in the present disclosure may be configured or predefined. Values of information in tables are only examples, and may be configured as other values, which are not limited in the disclosure. When corresponding relationships between information and parameters are configured, it is not always necessary to configure all corresponding relationships indicated in tables. For example, in the tables in the present disclosure, corresponding relationships indicated by some rows may not be configured. For another example, appropriate transformations and adjustments, such as splitting and merging, may be made based on the above tables. Names of parameters shown in headers in the tables may be other names understandable by the communication apparatus, and values or representations of the parameters may be other values or representations understandable by the communication apparatus. When the above tables are implemented, other data structures may be used, and for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, the units and algorithm steps of each example described in conjunction with the embodiments disclosed herein can be implemented in an electronic hardware or a combination of an electronic hardware and a computer software. Whether the functions are executed by the hardware or the software depends on a specific application and a design constraint of the technical solution. Those skilled in the art may adopt different methods for each specific application to implement the described functions, but such implementation should not be considered beyond the scope of the present disclosure.

Those skilled in the art may clearly understand that, specific working processes of systems, apparatuses and units described above may refer to corresponding processes in the above method embodiments, which will not be repeated here.

The above are only implementations of the disclosure, but the protection scope of the disclosure is not limited thereto. Any changes or substitutions that may be easily considered by those skilled in the art within the scope of the present disclosure should be covered by the scope of protection of the disclosure. Therefore, the protection scope of the present disclosure should be subject to the protection scope of claims.

**Claims**

1. A method for determining a transmission resource, performed by a user equipment (UE), comprising:
determining, based on a protocol agreement or indication information sent by a network device, a resource block group (RBG) in a downlink slot or a flexible slot configured with an uplink subband.

2. The method according to claim 1, wherein determining, based on the protocol agreement or the indication information sent by the network device, the RBG in the downlink slot or the flexible slot configured with the uplink subband comprises:

    receiving RBG configuration information sent by the network device; and
    determining a count and size of the RBG within a range of a bandwidth part (BWP) based on bandwidth information of the BWP and the RBG configuration information.

3. The method according to claim 2, wherein the RBG comprises a first resource block (RB), and the method further comprises:

    determining the first RB based on the count and the size of the RBG, wherein the first RB is within a downlink RBG; and
    receiving downlink data or a downlink channel using the first RB.

4. The method according to claim 3, wherein determining the first RB based on the count and the size of the RBG comprises:

    determining an RB that meets a first condition as the first RB,
    wherein the first condition is that the RB does not overlap with the uplink subband or a guard band.

5. The method according to any one of claims 2-4, wherein the RBG comprises a second resource block (RB), and the method further comprises:

    determining the second RB based on the count and the size of the RBG, wherein the second RB is within the uplink subband; and
    sending uplink data or an uplink channel using the second RB.

6. The method according to claim 5, wherein determining the second RB based on the count and the size of the RBG comprises:

    determining an RB that meets a second condition as the second RB,
    wherein the second condition is that the RB does not overlap with a guard band or a downlink subband.

7. The method according to claim 1, wherein determining, based on the protocol agreement or the indication information sent by the network device, the RBG in the downlink slot or the flexible slot configured with the uplink subband comprises:

    receiving subband indication information and RBG configuration information sent by the network device; and
    determining a count and size of the RBG within a range of a subband indicated by the subband indication information based on a size of the subband indicated by the subband indication information and the RBG configuration information.

8. The method according to claim 1, wherein determining, based on the protocol agreement or the indication information sent by the network device, the RBG in the downlink slot or the flexible slot configured with the uplink subband comprises:

    receiving subband indication information, guard band indication information and RBG configuration information sent by the network device; and
    determining a count and size of the RBG within a range of a subband indicated by the subband indication information and a guard band indicated by the guard band indication information based on a size of the subband, a size of the guard band and the RBG configuration information.

9. The method according to claim 1, wherein determining, based on the indication information sent by the network device, the RBG in the downlink slot or the flexible slot configured with the uplink subband comprises:

   determining a resource determination manner based on the indication information sent by the network device; and
   determining, based on the resource determination manner, the RBG in the downlink slot or the flexible slot configured with the uplink subband.

10. The method according to claim 9, further comprising:

    receiving the indication information sent by the network device;
    wherein the indication information indicates an RBG determination manner.

11. A method for determining a transmission resource, performed by a network device, comprising:
    determining, based on a protocol agreement or relevant indication information, a resource block group (RBG) in a downlink slot or a flexible slot configured with an uplink subband.

12. The method according to claim 11, wherein determining, based on the protocol agreement or the relevant indication information, the RBG in the downlink slot or the flexible slot configured with the uplink subband comprises:
    determining a count and size of the RBG within a range of a bandwidth part (BWP) based on bandwidth information of the BWP and RBG configuration information.

13. The method according to claim 12, wherein the RBG comprises a first resource block (RB), and the method further comprises:

    determining the first RB based on the count and the size of the RBG, wherein the first RB is within a downlink RBG; and
    sending downlink data or a downlink channel using the first RB.

14. The method according to claim 13, wherein determining the first RB based on the count and the size of the RBG comprises:

    determining an RB that meets a first condition as the first RB,
    wherein the first condition is that the RB does not overlap with the uplink subband or a guard band.

15. The method according to any one of claims 12-14, further comprising:
    sending the RBG configuration information to a user equipment (UE).

16. The method according to any one of claims 12-15, wherein the RBG comprises a second resource block (RB), and the method further comprises:

    determining the second RB based on the count and the size of the RBG, wherein the second RB is within the uplink subband; and
    receiving uplink data or an uplink channel using the second RB.

17. The method according to claim 16, wherein determining the second RB based on the count and the size of the RBG comprises:

    determining an RB that meets a second condition as the second RB,
    wherein the second condition is that the RB does not overlap with a guard band or a downlink subband.

18. The method according to claim 11, wherein determining, based on the protocol agreement or the relevant indication information, the RBG in the downlink slot or the flexible slot configured with the uplink subband comprises:
    determining a count and size of the RBG within a range of a subband based on a size of the subband and RBG configuration information.

19. The method according to claim 18, further comprising:

sending subband indication information and the RBG configuration information to a user equipment (UE); wherein the subband indication information indicates the subband.

20. The method according to claim 11, wherein determining, based on the protocol agreement or the relevant indication information, the RBG in the downlink slot or the flexible slot configured with the uplink subband comprises: determining a count and size of the RBG within a range of a subband and a guard band based on a size of the subband, a size of the guard band and RBG configuration information.

21. The method according to claim 20, further comprising:

sending subband indication information, guard band indication information and the RBG configuration information to a user equipment (UE);
wherein the subband indication information indicates the subband and the guard band indication information indicates the guard band.

22. The method according to claim 11, wherein determining, based on the protocol agreement or the relevant indication information, the RBG in the downlink slot or the flexible slot configured with the uplink subband comprises:

determining a resource determination manner based on the relevant indication information; and
determining, based on the resource determination manner, the RBG in the downlink slot or the flexible slot configured with the uplink subband.

23. The method according to claim 22, further comprising:

sending indication information to the UE;
wherein the indication information indicates an RBG determination manner.

24. An apparatus for determining a transmission resource, applied to a user equipment (UE), comprising:
a determining unit, configured to determine, based on a protocol agreement or indication information sent by a network device, a resource block group (RBG) in a downlink slot or a flexible slot configured with an uplink subband.

25. An apparatus for determining a transmission resource, applied to a network device, comprising:
a determining unit, configured to determine, based on a protocol agreement or relevant indication information, a resource block group (RBG) in a downlink slot or a flexible slot configured with an uplink subband.

26. A communication apparatus, comprising a processor and a memory, wherein a computer program is stored on the memory and runnable on the processor to enable the apparatus to perform:

a method according to any one of claims 1 to 10; or
a method according to any one of claims 11 to 23.

27. A communication apparatus, comprising a processor and interface circuit, wherein the interface circuit is configured to receive an instruction and transmit the instruction to the processor; and
the processor is configured to execute the instruction to perform:

a method according to any one of claims 1 to 10; or
a method according to any one of claims 11 to 23.

28. A computer-readable storage medium, wherein an instruction is stored on the computer-readable storage medium, and when the instruction is executed, a method according to any one of claims 1 to 10 or a method according to any one of claims 11 to 23 is implemented.

29. A communication system, comprising a user equipment (UE) and a network device,

wherein the UE is configured to perform a method according to any one of claims 1 to 10; and
the network device is configured to perform a method according to any one of claims 11 to 23.

| determining, based on a protocol agreement or indication information sent by a network device, a resource block group (RBG) in a downlink slot or a flexible slot configured with an uplink subband | 101 |

FIG. 1

UL subband

BWP

Case-1 non-overlapping

Downlink resource

Uplink resource

FIG. 2

| receiving RBG configuration information sent by the network device | 201 |

| determining a count and size of the RBG within a range of a bandwidth part (BWP) based on bandwidth information of the BWP and the RBG configuration information | 202 |

FIG. 3

```
┌─────────────────────────────────┐        2021
│ determining a first RB based on │╱─
│   the count and the size of the │
│             RBG                 │
└─────────────────────────────────┘
                 │
                 ▼
┌─────────────────────────────────┐        2022
│    receiving downlink data or a │╱─
│  downlink channel using the     │
│          first RB               │
└─────────────────────────────────┘
                 │
                 ▼
┌─────────────────────────────────┐        2023
│  determining a second RB based  │╱─
│  on the count and the size of   │
│          the RBG                │
└─────────────────────────────────┘
                 │
                 ▼
┌─────────────────────────────────┐        2024
│   sending uplink data or an     │╱─
│ uplink channel using the        │
│          second RB              │
└─────────────────────────────────┘
```

FIG. 4

FIG. 5

receiving subband indication information and RBG configuration information sent by the network device — 501

determining a count and size of the RBG within a range of a subband indicated by the subband indication information based on a size of the subband indicated by the subband indication information and the RBG configuration information — 502

FIG. 6

FIG. 7

receiving subband indication information, guard band indication information and RBG configuration information sent by the network device — 701

determining a count and size of the RBG within a range of a subband indicated by the subband indication information and a guard band indicated by the guard band indication information based on a size of the subband, a size of the guard band and the RBG configuration information — 702

FIG. 8

determining RBG based on BWP | determining RBG based on DL subband

| DL subband+ guard band | RBG#0 |
| RBG#1 |
| RBG#2 |

RBG — RBG#3
RBG#4

| Guard band +DL subband | RBG#5 |
| RBG#6 |
| RBG#7 |

RBG#0
RBG#1
RBG#2
RBG#3
RBG#4
RBG#5

Guard band

UL subband

Guard band

RBG#0
RBG#1
RBG#2
RBG#3
RBG#4
RBG#5

DL BWP

**FIG. 9**

determining a resource determination manner based on the indication information sent by the network device — 901

determining, based on the resource determination manner, the RBG in the downlink slot or the flexible slot configured with the uplink subband. — 902

**FIG. 10**

receiving the indication information sent by the network device — 1001

**FIG. 11**

determining, based on a protocol agreement or relevant indication information, a resource block group (RBG) in a downlink slot or a flexible slot configured with an uplink subband.

1101

FIG. 12

determining a count and size of the RBG within a range of a bandwidth part (BWP) based on bandwidth information of the BWP and RBG configuration information

1201

FIG. 13

determining a first RB based on the count and the size of the RBG

1211

↓

sending downlink data or a downlink channel using the first RB

1212

↓

determining a second RB based on the count and the size of the RBG

1213

↓

sending uplink data or an uplink channel using the second RB

1214

FIG. 14

sending the RBG configuration information to a user equipment (UE)

1301

FIG. 15

determining a count and size of the RBG within a range of a subband based on a size of the subband and RBG configuration information | 1401

FIG. 16

sending subband indication information and the RBG configuration information to a user equipment (UE) | 1501

FIG. 17

determining a count and size of the RBG within a range of a subband and a guard band based on a size of the subband, a size of the guard band and RBG configuration information | 1601

FIG. 18

sending subband indication information, guard band indication information and the RBG configuration information to a user equipment (UE) | 1701

FIG. 19

determining a resource determination manner based on the indication information sent by the network device — 1801

determining, based on the resource determination manner, the RBG in the downlink slot or the flexible slot configured with the uplink subband — 1802

FIG. 20

sending indication information to the UE — 1901

FIG. 21

| UE | network device |

based on a protocol agreement or indication information sent by a network device, the UE determines an RBG in a downlink slot or a flexible slot configured with an uplink subband — 2001

based on a protocol agreement or relevant indication information, the network device determines the RBG in the downlink slot or the flexible slot configured with the uplink subband. — 2002

FIG. 22

apparatus 2100 for determining transmission resource

determining unit ⌒ 2101

FIG. 23

apparatus 2100 for determining transmission resource ⌒ 2101

determining unit

⌒ 2102

tranaceiver unit

FIG. 24

apparatus 2200 for determining transmission resource

determining unit ⌒ 2201

FIG. 25

apparatus 2200 for determining transmission resource

2201

determining unit

2202

transceiver unit

FIG. 26

communication apparatus 2500

2501

processor

2503

computer programmer

2502

memory

2504

computer programmer

transceiver

2505

receiver

transmitter

interface circuit

2507

antenna

2506

FIG. 27

EP 4 694 448 A1

2601

processor

2602

interface

2603

memory

FIG. 28

communication system

UE

network device

FIG. 29

33

## INTERNATIONAL SEARCH REPORT

| International application No. |
| --- |
| **PCT/CN2023/085779** |

| A. | CLASSIFICATION OF SUBJECT MATTER |
| --- | --- |

H04W 72/0446(2023.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXTC, DWPI, VEN, CNKI: 资源 指示 下行 子带 灵活 时隙 带宽 保护频带 BWP RB RBG resource indicate DL subband flexible time slot band GB

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115175336 A (VIVO MOBILE COMMUNICATION CO., LTD.) 11 October 2022 (2022-10-11) <br> description paragraphs 68-635 | 1-29 |
| X | CN 115868226 A (BEIJING XIAOMI MOBILE SOFTWARE CO., LTD.) 28 March 2023 (2023-03-28) <br> description paragraphs 40-161 | 1-29 |
| A | CN 109802778 A (HUAWEI TECHNOLOGIES CO., LTD.) 24 May 2019 (2019-05-24) <br> entire document | 1-29 |
| A | CN 115804206 A (HUAWEI TECHNOLOGIES CO., LTD.) 14 March 2023 (2023-03-14) <br> entire document | 1-29 |
| A | US 2019349898 A1 (SAMSUNG ELECTRONICS CO., LTD.) 14 November 2019 (2019-11-14) <br> entire document | 1-29 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 November 2023** | **22 November 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

# EP 4 694 448 A1

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 115175336 | A | 11 October 2022 | WO | 2022214013 | A1 | 13 October 2022 |
| CN | 115868226 | A | 28 March 2023 | WO | 2023279337 | A1 | 12 January 2023 |
| CN | 109802778 | A | 24 May 2019 | WO | 2019096131 | A1 | 23 May 2019 |
| CN | 115804206 | A | 14 March 2023 | WO | 2022027695 | A1 | 10 February 2022 |
| | | | | EP | 4192156 | A1 | 07 June 2023 |
| | | | | US | 2023180203 | A1 | 08 June 2023 |
| US | 2019349898 | A1 | 14 November 2019 | WO | 2019216748 | A1 | 14 November 2019 |
| | | | | EP | 3782416 | A1 | 24 February 2021 |
| | | | | EP | 3782416 | A4 | 04 August 2021 |
| | | | | US | 11490376 | B2 | 01 November 2022 |
| | | | | CN | 110475342 | A | 19 November 2019 |

Form PCT/ISA/210 (patent family annex) (July 2022)